# EUROPÄISCHE PATENTSCHRIFT

(11) **EP 2 236 533 B1**
(45) Veröffentlichungstag und Bekanntmachung des Hinweises auf die Patenterteilung: **09.11.2011**
(21) Anmeldenummer: 09156889.9
(22) Anmeldetag: 31.03.2009
(51) Int. Cl.: C08G 18/10, C08G 18/12, C08G 18/79, C09J 175/00

(54) **Heisshärtende oder hitzeaktivierbare Zusammensetzung enthaltend ein oberflächendesaktiviertes Polyisocyanat**
Heat curing or heat activatable composition comprising a surface deactivated polyisocyanate
Composition durcissant à chaud ou thermoactivable contenant un polyisocyanate désactivé en surface

(43) Veröffentlichungstag der Anmeldung: 06.10.2010
(73) Patentinhaber: Sika Technology AG, 6340 Baar (CH)
(72) Erfinder: Burckhardt, Urs, 8049, Zürich (CH); Gimmnich, Peter, 78467, Konstanz (CH)
(74) Vertreter: Sika Patent Attorneys

(56) Entgegenhaltungen:
- EP-A- 0 062 780
- EP-A- 0 100 508
- EP-A- 0 153 579
- WO-A-94/18255
- WO-A-99/01493

## Beschreibung

### Technisches Gebiet

Die Erfindung betrifft das Gebiet der härtbaren Polyurethanzusammensetzungen und deren Anwendung als heisshärtender Klebstoff sowie als hitzeaktivierbarer Klebstoff, Dichtstoff und Beschichtung.

### Stand der Technik

Einkomponentige feuchtigkeitsreaktive Polyurethanzusammensetzungen mit freien Isocyanatgruppen werden seit langem als Kleb- und Dichtstoffe und als Beschichtungsmaterialien eingesetzt. Solche Systeme sind einfach in der Anwendung, da keine Mischprozesse notwendig und die Offenzeiten lang sind. Sie härten allerdings langsam aus, da die zur Aushärtung benötigte Feuchtigkeit durch Diffusionsprozesse aus der Luft in das Material eindringen muss, was beim Voranschreiten der Aushärtung gegen innen zunehmend langsamer vor sich geht. Zudem sind sie nur in einem begrenzten Zeitraum lagerfähig.

Für gewisse Anwendungen werden Systeme gewünscht, die einerseits eine ausreichend lange Offenzeit aufweisen, um eine genaue und sichere Verarbeitung zu gewährleisten, andererseits aber sehr schnell aushärten, um schon kurze Zeit nach der Applikation belast- oder bearbeitbar zu werden, beispielsweise damit mit einem Klebstoff gefügte Teile bewegt oder fixierende Halterungen entfernt werden können. Hohe Aushärtungsgeschwindigkeiten bei gleichzeitig langer Offenzeit lassen sich insbesondere mit heisshärtenden Polyurethanzusammensetzungen, sogenannten Hotcures, erzielen.

Seit langem bekannt sind heisshärtende Polyurethanzusammensetzungen, in denen die Isocyanatgruppen chemisch blockiert sind, wobei als Blockierungsmittel beispielsweise Phenole, Oxime oder Lactame eingesetzt werden. Diese Systeme haben insbesondere den Nachteil, dass die bei der Aushärtung freigesetzten Blockierungsmittel zur Bildung von toxischen Dämpfen und störenden Gerüchen führen, was besonders bei einer Verwendung der Zusammensetzungen in Innenräumen ein Nachteil sein kann.

Aus EP 0 062 780 A1 und EP 0 100 508 A2 sind heisshärtende Polyurethanzusammensetzungen bekannt, welche feinteilige feste Isocyanate enthalten, die durch Behandlung mit Aminen oberflächendesaktiviert wurden. Die oberflächendesaktivierten Isocyanate liegen dabei hauptsächlich in Kombination mit Polyolen vor. Diese Systeme sind bei Raumtemperatur lagerstabil und härten bei Temperaturen im Bereich von 70 °C bis 180 °C ohne Freisetzung flüchtiger Substanzen aus. Um eine schnelle Aushärtung zu erreichen, müssen aber entweder vergleichsweise hohe Temperaturen oder sehr aktive Katalysatoren verwendet werden, da die Reaktion von Hydroxylgruppen mit Isocyanatgruppen eher langsam ist. Zudem besteht die Gefahr von Blasenbildung bei der Aushärtung, insbesondere wenn zwischen der Applikation und der Aushärtung einige Zeit vergeht, da die Zusammensetzung aus der Umgebung Feuchtigkeit aufnehmen kann und bei der Reaktion von Isocyanaten mit Wasser CO₂ gebildet wird.

Aus EP 0 153 579 A2 sind entsprechende Systeme bekannt, bei welchen Polyole zumindest teilweise durch Polyamine ersetzt sind. Damit können die zuvor genannten Probleme zwar weitgehend vermindert werden. Diese Systeme weisen jedoch insbesondere Schwächen in der Dehnbarkeit und/oder Festigkeit auf und eigenen sich deshalb schlecht als elastische Klebstoffe. Die Auswahl an dafür geeigneten Polyaminen mit genügend hohem Molekulargewicht - so dass elastische Eigenschaften im ausgehärteten Endprodukt erhalten werden - ist zudem sehr beschränkt. Entweder man verwendet langkettige Typen von Polyether-Polyaminen, wie sie beispielsweise unter dem Handelsnamen Jeffamine^{®} (von Huntsman) kommerziell erhältlich, aber verhältnismässig teuer sind, oder man stellt andere geeignete polymere Strukturen mit endständigen Aminogruppen her, was aber mit erheblichem Aufwand verbunden ist. Weitere Nachteile ergeben sich aus dem Vorhandensein von freien Aminogruppen der Polyamine. Einerseits gehen die Aminogruppen unerwünschte Nebenreaktionen ein, beispielsweise mit Ester-Verbindungen oder mit Kohlendioxid aus der Luft. Andererseits führen die Aminogruppen der Polyamine aufgrund ihrer Basizität und ihrer Korrosivität zu grossen Einschränkungen beim Handling und ergeben Probleme in der Arbeitssicherheit.

### Darstellung der Erfindung

Aufgabe der vorliegenden Erfindung ist es daher, härtbare Zusammensetzungen auf der Basis von oberflächendesaktivierten Isocyanaten zur Verfügung zu stellen, welche die Nachteile des Standes der Technik überwinden.

Überraschenderweise wurde gefunden, dass eine härtbare Zusammensetzung gemäss Anspruch 1 in der Lage ist, dieses Problem zu lösen.

Derartige Zusammensetzungen zeichnen sich durch eine äusserst hohe Lagerstabilität aus, solange sie nicht erwärmt werden.

Insbesondere lassen sich heisshärtende Zusammensetzungen realisieren, welche bei Hitzeeinwirkung aushärten.

Weiterhin lassen sich insbesondere auch hitzeaktivierbare Zusammensetzungen realisieren. Bei Hitzeeinwirkung werden derartige Zusammensetzungen nicht ausgehärtet, werden aber derart aktiviert, so dass sie unter dem Einfluss von Feuchtigkeit auszuhärten vermögen.

Es lassen sich in einfacher Art und Weise Zusammensetzungen realisieren, welche ausgehärtet über eine hohe Dehnbarkeit und eine hohe Festigkeit, d.h. über eine Bruchdehnung von mindestens 300 % und eine Zugfestigkeit von mindestens 3.0 MPa, beide gemessen nach DIN EN 53504, verfügen. Solche Materialien sind besonders geeignet als elastische Klebstoffe.

Insbesondere sind diese härtbaren Zusammensetzungen frei von Polyaminen und sind deshalb nicht korrosiv und vorteilhaft im Handling und in der Arbeitssicherheit. Zudem sind härten sie sehr schnell und im Wesentlichen blasenfrei aus.

Die härtbaren Zusammensetzungen eignen sich insbesondere als Klebstoffe.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine härtbare Zusammensetzung umfassend
a) mindestens ein blockiertes Amin **BA,** welches eine blockierte, hydrolytisch aktivierbare Aminogruppe und entweder mindestens eine weitere blockierte, hydrolytisch aktivierbare Aminogruppe oder mindestens eine Reaktivgruppe **R,** welche ausgewählt ist aus der Gruppe bestehend aus Hydroxylgruppe, Mercaptogruppe und sekundäre Aminogruppe, aufweist;
b) mindestens ein bei Raumtemperatur festes, oberflächendesaktiviertes Polyisocyanat **DI;** und
c) gegebenenfalls Wasser oder eine Wasser erzeugende Substanz.

Der Begriff "primäre Aminogruppe" bezeichnet im vorliegenden Dokument eine Aminogruppe in der Form einer NH₂-Gruppe, die an einen organischen Rest gebunden ist. Der Begriff "sekundäre Aminogruppe" bezeichnet eine Aminogruppe, in der das Stickstoffatom an zwei organische Reste gebunden ist, welche auch gemeinsam Teil eines Rings sein können. Der Begriff "tertiäre Aminogruppe" bezeichnet eine Aminogruppe, in der das Stickstoffatom (= tertiärer Amin-Stickstoff) an drei organische Reste gebunden ist, wobei zwei dieser Reste auch gemeinsam Teil eines Rings sein können.

Als "Raumtemperatur" wird im vorliegenden Dokument eine Temperatur von 25 °C bezeichnet.

Mit "Poly" beginnende Substanznamen wie Polyamin, Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyhamstoffe, Polyester-Polyharnstoffe, Polyisocyanurate und Polycarbodiimide.

Unter einer "geruchsarmen" Substanz wird eine Substanz verstanden, deren Geruch von menschlichen Individuen nur in geringem Masse wahrnehmbar, d.h. riechbar, ist, die also keinen intensiven Geruch aufweist, und wobei dieser geringe Geruch von den meisten menschlichen Individuen nicht als unangenehm oder abstossend empfunden wird.

Unter einer "geruchsfreien" Substanz wird eine Substanz verstanden, die für die meisten menschlichen Individuen nicht riechbar ist, die also keinen wahrnehmbaren Geruch aufweist.

Der Begriff "Endfestigkeit" bezeichnet im vorliegenden Dokument die Festigkeit der vollständig ausgehärteten Zusammensetzung, wobei mit Festigkeit insbesondere die Zugfestigkeit und das Elastizitätsmodul gemeint sind.

Die fett markierten Bezeichnungen wie **BA, R, DI, ALD** oder dergleichen im vorliegenden Dokument dienen lediglich für das bessere Leseverständnis und Identifizierung.

Die härtbare Zusammensetzung umfasst mindestens ein blockiertes Amin **BA,** welches eine blockierte, hydrolytisch aktivierbare Aminogruppe und entweder mindestens eine weitere blockierte, hydrolytisch aktivierbare Aminogruppe oder mindestens eine Reaktivgruppe **R,** welche ausgewählt ist aus der Gruppe bestehend aus Hydroxylgruppe, Mercaptogruppe und sekundäre Aminogruppe, aufweist.

Die blockierte, hydrolytisch aktivierbare Aminogruppe des blockierten Amins **BA** ist insbesondere ausgewählt aus der Gruppe bestehend aus Enaminogruppen, Oxazolidinogruppen, Ketiminogruppen und Aldiminogruppen. Solche blockierten Amine **BA** sind in der Polyurethanchemie bekannte Substanzen, die als sogenannte latente Härter in Isocyanatgruppen aufweisenden Zusammensetzungen verwendet werden.

Als "Oxazolidinogruppe" werden im vorliegenden Dokument sowohl Tetrahydrooxazol-Gruppen (5-Ring) als auch Tetrahydrooxazin-Gruppen (6-Ring) bezeichnet.

Das blockierte Amin **BA** ist insbesondere aus der Kondensationsreaktion von einem primären oder sekundären Amin mit einem Keton oder Aldehyd erhältlich. Als Keton geeignet sind insbesondere Aceton, Methylethylketon, Methylpropylketon, Methylisopropylketon, Methylisobutylketon, Methylpentylketon, Methylisopentylketon, Diethylketon, Dipropylketon, Diisopropylketon, Dibutylketon, Diisobutylketon, Cyclopentanon, Cyclohexanon und Actetophenon. Als Aldehyd geeignet sind insbesondere Formaldehyd, Acetaldehyd, Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd, Diphenylacetaldehyd, Benzaldehyd und substituierte Benzaldehyde, sowie weiterhin Aldehyde **ALD** der Formel (XI), wie sie weiter hinten in diesem Dokument erwähnt werden.

Ein mindestens eine Enaminogruppe aufweisendes blockiertes Amin **BA** ist insbesondere erhältlich aus der Kondensationsreaktion von einem mindestens eine sekundäre Aminogruppe aufweisenden Amin mit mindestens einem Keton oder Aldehyd, welches in α-Stellung zur Carbonylgruppe mindestens ein Wasserstoffatom aufweist und damit enolisierbar ist, insbesondere den Ketonen Aceton, Methylethylketon, Methylpropylketon, Methylisopropylketon, Methylisobutylketon, Methylpentylketon, Methylisopentylketon, Diethylketon, Dipropylketon, Diisopropylketon, Dibutylketon, Diisobutylketon, Cyclopentanon, Cyclohexanon und den Aldehyden Acetaldehyd, Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd, Diphenylacetaldehyd. Als mindestens eine sekundäre Aminogruppe aufweisendes Amin geeignet sind einerseits Amine mit mindestens zwei sekundären Aminogruppen, insbesondere Piperazin, 2,5- und 2,6-Dimethylpiperazin, 2,3,5,6-Tetramethylpiperazin, 1,7-Dioxa-4,10-diazacyclododecan, N,N'-Dibutylethylendiamin; N,N'-Di-tert.butyl-ethylendiamin, N,N'-Dimethyl-1,6-hexandiamin, N,N'-Diethyl-1,6-hexandiamin, N,N'-Dimethyl-diethylentriamin, N,N'-Dimethyl-dipropylentriamin, 1-(1-Methylethyl-amino)-3-(1-methylethyl-aminomethyl)-3,5,5-trimethylcyclohexan (Jefflink^{®} 754 von Huntsman), N4-Cyclohexyl-2-methyl-N2-(2-methylpropyl)-2,4-pentandiamin, N,N'-Dialkyl-1,3-xylylendiamin, Bis-(4-(N-alkylamino)-cyclohexyl)-methan, 4,4'-Trimethylen-dipiperidin und N-alkylierte Polyetheramine, beispielsweise Jeffamine^{®}-SD-231 (von Huntsman); weiterhin Amine mit einer Hydroxylgruppe und einer sekundären Aminogruppe, insbesondere N-(2-Hydroxyethyl)-piperazin, 4-Hydroxy-piperidin, sowie monoalkoxylierte primäre Monoamine, wie insbesondere N-Methyl-ethanolamin, N-Ethyl-ethanolamin, N-Butyl-ethanolamin und N-Butyl-isopropanolamin; weiterhin Amine mit einer Mercaptogruppe und einer sekundären Aminogruppe, insbesondere N-(2-Mercaptoethyl)-piperazin, 4-Mercapto-piperidin und 2-Mercaptoethyl-butylamin.

Ein mindestens eine Oxazolidinogruppe aufweisendes blockiertes Amin **BA** ist insbesondere erhältlich aus der Kondensationsreaktion von mindestens einem Hydroxyamin, in welchem die Hydroxyl- und die primäre Aminogruppe durch einen, gegebenenfalls substituierten, Ethylen- oder Trimethylenrest getrennt sind, mit mindestens einem Keton oder Aldehyd, insbesondere Formaldehyd oder einem der genannten enolisierbaren Ketone oder Aldehyde; besonders geeignet sind die Aldehyde, insbesondere 2-Methylpropanal. Als Hydroxyamin geeignet sind insbesondere Diethanolamin und Diisopropanolamin, die zu Hydroxyoxazolidinen führen, aus welchen leicht Polyoxazolidine hergestellt werden können, beispielsweise durch Umsetzung mit einem Polyisocyanat oder einem Polyester.

Als blockiertes Amin **BA** bevorzugt ist in einer Ausführungsform ein Oxazolidin **BA1,** welches eine Oxazolidinogruppe und entweder mindestens eine weitere blockierte, hydrolytisch aktivierbare Aminogruppe oder mindestens eine Reaktivgruppe **R,** welche ausgewählt ist aus der Gruppe bestehend aus Hydroxylgruppe, Mercaptogruppe und sekundäre Aminogruppe, aufweist.

Geeignete kommerzielle Oxazolidine sind beispielsweise Härter OZ (von Bayer), Zoldine^{®} RD-4 (von Angus Chemical), sowie Incozol^{®} 3, Incozol^{®} LV, Incozol^{®} 4, Incozol^{®} HP und Incozol^{®} NC (von Industrial Copolymers).

Ein mindestens eine Ketimino- oder Aldiminogruppe aufweisendes blockiertes Amin **BA** ist insbesondere erhältlich aus der Kondensationsreaktion von einem mindestens eine primäre Aminogruppe aufweisenden Amin mit mindestens einem Keton oder Aldehyd, wie es vorgängig erwähnt wurde. Wird zur Blockierung einer primären Aminogruppe ein Keton eingesetzt, so wird eine Ketiminogruppe gebildet, während beim Einsatz eines Aldehyds eine Aldiminogruppe gebildet wird. Als mindestens eine primäre Aminogruppe aufweisendes Amin geeignet sind insbesondere Amine **B1** der Formel (X a) und Amine **B2** der Formel (X b), wie sie weiter hinten in diesem Dokument erwähnt sind.

Geeignete kommerzielle Ketimine oder Aldimine sind beispielsweise Epikure^{®} Curing Agent 3502 (von Resolution Performance Products), Desmophen^{®} LS 2965A (von Bayer) und Vestamin^{®} A 139 (von Evonik Degussa).

Ketimino- und Aldiminogruppen, welche abgeleitet sind von einem enolisierbaren Keton oder Aldehyd, also einem Keton oder Aldehyd, welcher in α-Stellung zum C-Atom der Carbonylgruppen ein Wasserstoffatom aufweist, können zu Enaminogruppen tautomerisieren; sie sind also zur Enamin-Bildung fähig. Solche Ketimino- und Aldiminogruppen werden im Folgenden deshalb auch als "zur Enamin-Bildung fähige" Ketimino- und Aldiminogruppen genannt.

Enaminogruppen und zur Enamin-Bildung fähige Ketimino- und Aldiminogruppen können in der Wärme unter Umständen auch ohne die Einwirkung von Wasser, also ohne Hydrolyse, direkt mit Isocyanatgruppen reagieren. Die Reaktion mit Isocyanaten ist in Gegenwart von Wasser aber wesentlich schneller.

Speziell bevorzugt als blockiertes Amin **BA** ist in einer weiteren Ausführungsform ein Aldimin **BA2** der Formel (I), 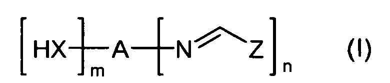 wobei
n für 1 oder 2 oder 3 oder 4 steht, und
m für 0 oder 1 steht,
mit der Massgabe, dass m+n für 2 oder 3 oder 4 steht;
und wobei
- A: entweder für einen m+n-wertigen Kohlenwasserstoffrest mit 2 bis 30 C- Atomen, welcher gegebenenfalls mindestens ein Heteroatom, ins- besondere in der Form von Ether-Sauerstoff oder tertiärem Amin-Stick- stoff, enthält, steht, oder zusammen mit R⁷ für einen (n+2)-wertigen Kohlenwasserstoffrest mit 3 bis 30 C-Atomen, welcher gegebenenfalls mindestens ein Hetero- atom, insbesondere in der Form von Ether-Sauerstoff oder tertiärem Amin-Stickstoff, enthält, steht;
- X: für O oder S oder N-R⁶ oder N-R⁷ steht,
wobei R⁶
entweder für einen einwertigen Kohlenwasserstoffrest mit 1 bis 20 C-Atomen, welcher gegebenenfalls mindestens eine Carbon- säureester-, Nitril-, Nitro-, Phosphonsäureester-, Sulfon- oder Sulfonsäureester-Gruppe aufweist, steht,
oder für einen Substituenten der Formel (II) steht, 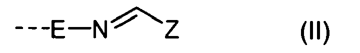 wobei
   E für einen zweiwertigen, gegebenenfalls Ether-Sauerstoff oder tertiären Amin-Stickstoff aufweisenden, Kohlenwasser- stoffrest mit 2 bis 12 C-Atomen steht, und
R⁷ zusammen mit A für einen (n+2)-wertigen Kohlenwasserstoffrest mit 3 bis 30 C-Atomen, welcher gegebenenfalls mindestens ein Heteroatom, insbesondere in Form von Ether-Sauerstoff oder tertiärem Amin- Stickstoff, enthält, steht; und
- **Z**: frei ist von Reaktivgruppen **R** und von primären Aminogruppen und entweder für einen Rest Z¹ der Formel (III) steht, 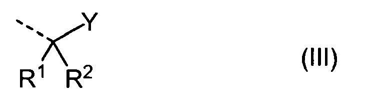 wobei
Y für einen einwertigen Kohlenwasserstoffrest mit 1 bis 32 C- Atomen steht, welcher gegebenenfalls mindestens ein Heteroatom, insbesondere Sauerstoff oder Stickstoff in der Form von Ether-, Carbonyl-, Ester-, Amido-, Harnstoff-, Urethan- oder tertiären Amino- gruppen, aufweist, und
R¹ und R²
entweder unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen, der Teil eines, gegebenenfalls substituierten, car- bocyclischen Rings mit 5 bis 8, bevorzugt 6, C-Atomen ist, stehen,
oder für einen Rest Z² steht,
wobei Z² entweder für einen substituierten oder unsubstituierten Aryl- oder Heteroaryl-Rest, welcher eine Ringgrösse von 5 bis 8, bevorzugt 6, Atomen aufweist, steht,
oder für 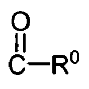 steht,
wobei R⁰ für ein Wasserstoffatom oder für einen Alkoxyrest oder für einen substituierten oder unsubstituierten Alkenyl- oder Arylalkenylrest mit mindestens 6 C-Atomen steht.

Die gestrichelten Linien in den Formeln in diesem Dokument stellen jeweils die Bindung zwischen einem Substituenten und dem zugehörigen Molekülrest dar.

Die Aldimine **BA2** der Formel (I) weisen Aldiminogruppen auf, welche am in α-Stellung zur Carbonylgruppe stehenden C-Atom kein Wasserstoffatom aufweisen und deshalb nicht zu Enaminogruppen tautomerisieren können, also nicht zur Enamin-Bildung fähig sind. Dadurch stellen diese Aldiminogruppen besonders gut geschützte ("blockierte") primäre Aminogruppen dar. Im Folgenden werden solche Aldiminogruppen auch als "nicht zur Enamin-Bildung fähige Aldiminogruppen" bezeichnet.

Bevorzugt enthält A keine Reaktivgruppen **R** und keine primären Aminogruppen.

Bevorzugt steht Z für Z¹.

Bevorzugt stehen R¹ und R² jeweils für einen Methylrest.

Bevorzugt steht Z¹ für einen Rest der Formel (III a) oder (III b) oder (III c) oder (III d), 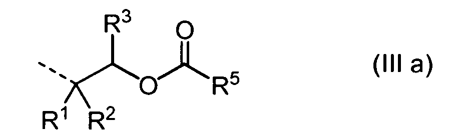 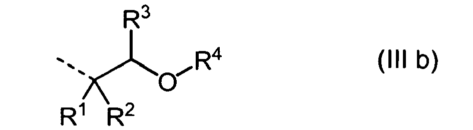 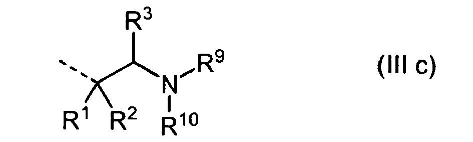 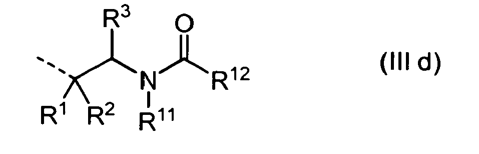 wobei
- R³: für ein Wasserstoffatom oder für eine Alkylgruppe oder für eine Cycloalkylgruppe oder für eine Arylalkylgruppe mit 1 bis 12 C-Atomen steht;
- R⁴: für einen Kohlenwasserstoffrest mit 1 bis 30 C-Atomen, welcher gege- benenfalls Ether-Sauerstoff enthält, steht;
- R⁵: entweder
für ein Wasserstoffatom steht,
oder für einen linearen oder verzweigten Alkylrest mit 1 bis 30 C-Atomen, gegebenenfalls mit cyclischen Anteilen und gegebenenfalls mit mindestens einem Heteroatom, insbesondere Sauerstoff in der Form von Ether-, Carbonyl- oder Ester-Gruppen, steht,
oder für einen einfach oder mehrfach ungesättigten, linearen oder ver- zweigten Kohlenwasserstoffrest mit 5 bis 30 C-Atomen steht, oder für einen, gegebenenfalls substituierten, aromatischen oder hetero- aromatischen 5- oder 6-gliedrigen Ring steht;
- R⁹ und R¹⁰: entweder
unabhängig voneinander jeweils für einen einwertigen aliphatischen, cycloaliphatischen oder arylaliphatischen Rest mit 1 bis 20 C-Atomen, welcher gegebenenfalls Heteroatome in der Form von Ether-Sauerstoff oder tertiärem Amin-Stickstoff enthält, stehen,
oder zusammen für einen zweiwertigen aliphatischen Rest mit 3 bis 20 C- Atomen, der Teil eines, gegebenenfalls substituierten, heterocyclischen Rings mit 5 bis 8, bevorzugt 6, Ringatomen ist und neben dem Stick- stoffatom gegebenenfalls weitere Heteroatome in der Form von Ether- Sauerstoff oder tertiärem Amin-Stickstoff enthält, stehen; und
- R¹¹ und R¹²: entweder
zusammen für einen, gegebenenfalls Sauerstoff- oder Schwefelatome auf- weisenden, zweiwertigen Rest mit 2 bis 10 C-Atomen, der Teil eines, gegebenenfalls substituierten, 5- oder 6- oder 7-gliedrigen Rings ist, stehen, oder
R¹¹ für einen Alkyl-, Cycloalkyl-, Arylalkyl- oder Acylrest mit 1 bis 10 C- Atomen steht, und
R¹² für ein Wasserstoffatom oder für einen einwertigen Rest mit 1 bis 20 C- Atomen, welcher ausgewählt ist aus der Gruppe bestehend aus Alkyl-, Cy- cloalkyl-, Arylalkyl-, Arylrest, -OR^{12'}, -SR^{12'} und -NR^{12'}R^{12"}, steht, wobei R^{12'} und R^{12"} entweder jeweils für einen Kohlenwasserstoffrest oder zusammen für einen Alkylenrest, der Teil eines 5-, 6- oder 7-gliedrigen Rings ist, stehen.

Bevorzugt steht R³ für ein Wasserstoffatom.

Bevorzugt steht R⁴ für einen Kohlenwasserstoffrest mit 6 bis 30, insbesondere mit 11 bis 30, C-Atomen, welcher gegebenenfalls Ether-Sauerstoff enthält.

Bevorzugt steht R⁵ für einen linearen oder verzweigten Alkylrest mit 6 bis 30, insbesondere mit 11 bis 30, C-Atomen, gegebenenfalls mit cyclischen Anteilen und gegebenenfalls mit mindestens einem Heteroatom, oder für einen einfach oder mehrfach ungesättigten, linearen oder verzweigten Kohlenwasserstoffrest mit 6 bis 30, insbesondere mit 11 bis 30, C-Atomen.

Bevorzugt stehen R⁹ und R¹⁰ jeweils unabhängig voneinander für Methyl, Ethyl, Propyl, Isopropyl, Butyl, Isobutyl, 2-Ethylhexyl, Cyclohexyl oder Benzyl, oder sie bilden zusammen - unter Einbezug des Stickstoffatoms - einen Ring, insbesondere einen Pyrrolidin-, Piperidin-, Morpholin- oder N-Alkylpiperazin-Ring, wobei dieser Ring gegebenenfalls substituiert ist.

Bevorzugt steht R¹¹ für einen Methyl-, Ethyl-, Propyl-, Isopropyl-, Butyl-, 2-Ethylhexyl-, Cyclohexyl- oder Benzylrest und R¹² für ein Wasserstoffatom oder einen Methyl-, Ethyl-, Propyl-, Isopropyl-, Butyl-, 2-Ethylhexyl-, Cyclohexyl-, Benzyl-, Methoxy-, Ethoxy-, Propoxy- oder Isopropoxyrest, oder R¹¹ und R¹² bilden zusammen - unter Einbezug des Stickstoffatoms und der Carbonyl- bzw. Thiocarbonylgruppe - einen Ring, insbesondere einen 2-Pyrrolidon-Ring, einen Pyrrolidin-2,5-dion-Ring, einen Piperidin-2-on-Ring, einen Piperidin-2,6-dion-Ring, einen Azepan-2-on-Ring, einen Oxazolidin-2-on-Ring oder einen Thiazolidin-2-on-Ring, wobei ein solcher Ring gegebenenfalls substituiert ist.

Am meisten bevorzugt steht Z¹ für einen Rest der Formel (III a'), 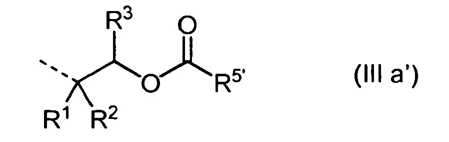 wobei
- R^{5'}: entweder für einen linearen oder verzweigten Alkylrest mit 6 bis 30, insbesondere 11 bis 30, C-Atomen, gegebenenfalls mit cyclischen Anteilen und gegebenen- falls mit mindestens einem Heteroatom, insbesondere Sauerstoff in der Form von Ether-, Carbonyl- oder Ester-Gruppen, steht,
oder für einen einfach oder mehrfach ungesättigten, linearen oder ver- zweigten Kohlenwasserstoffrest mit 6 bis 30, insbesondere 11 bis 30, C- Atomen, steht;
und R¹, R² und R³ die bereits genannten Bedeutungen aufweisen.

R^{5'} steht am meisten bevorzugt für einen C₁₁-Alkylrest.

Aldimine **BA2,** bei welchen Z für einen Rest Z¹ der Formel (III a') steht, werden im Folgenden Aldimine **BA2'** genannt. Die Aldimine **BA2'** weisen den Vorteil auf, dass sie geruchsarm oder geruchsfrei sind und dass der daraus freisetzbare Aldehyd ebenfalls geruchsarm oder geruchsfrei ist. Weist der Rest R^{5'} mindestens 11 C-Atome auf, sind die Aldimine geruchsfrei und der daraus freisetzbare Aldehyd ist ebenfalls geruchsfrei.

In einer bevorzugten Ausführungsform eines Aldimins **BA2** der Formel (I) steht m für 1. Solche Aldimine **BA2** der Formel (I) stellen Aldimine **BA2a** der Formel (VIII) dar. 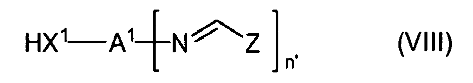 Hierbei stehen
n' für 1 oder 2 oder 3, bevorzugt für 1 oder 2, besonders bevorzugt für 1;
- A¹: entweder für einen (n'+1)-wertigen Kohlenwasserstoffrest mit 2 bis 30 C- Atomen, welcher gegebenenfalls mindestens ein Heteroatom, insbesondere in der Form von Ether-Sauerstoff oder tertiärem Amin-Stickstoff, enthält, steht,
oder zusammen mit R⁸ für einen (n'+2)-wertigen Kohlenwasserstoffrest mit 3 bis 30 C-Atomen, welcher gegebenenfalls mindestens ein Heteroatom, ins- besondere in der Form von Ether-Sauerstoff oder tertiärem Amin-Stickstoff, enthält, steht;
- X¹: für O oder S oder N-R⁶ oder N-R⁸,
wobei R⁸ zusammen mit A¹ für einen (n'+2)-wertigen Kohlenwasser- stoffrest mit 3 bis 30 C-Atomen, welcher gegebenenfalls mindestens ein Heteroatom, insbesondere in Form von Ether-Sauerstoff oder tertiärem Amin-Stickstoff, enthält, steht;
- und Z und R⁶: weisen die bereits genannten Bedeutungen auf.

Die Aldimine **BA2a** der Formel (VIII) sind insbesondere geeignet zur Herstellung von polymeren blockierten Aminen, wie sie weiter hinten in diesem Dokument beschrieben werden.

In einer weiteren bevorzugten Ausführungsform eines Aldimins **BA2** der Formel (I) steht m für 0. Solche Aldimine **BA2** der Formel (I) stellen Aldimine **BA2b** der Formel (IX) dar. 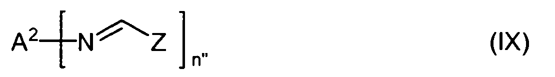 Hierbei stehen
n" für 2 oder 3 oder 4, bevorzugt für 2 oder 3, besonders bevorzugt für 2;
A² für einen n"-wertigen Kohlenwasserstoffrest mit 2 bis 30 C-Atomen, welcher gegebenenfalls mindestens ein Heteroatom, insbesondere in der Form von Ether-Sauerstoff oder tertiärem Amin-Stickstoff, enthält;
und Z weist die bereits genannte Bedeutung auf.

Ein Aldimin **BA2** der Formel (I) ist erhältlich aus der Kondensationsreaktion von mindestens einem Amin **B** der Formel (X) mit mindestens einem Aldehyd **ALD** der Formel (XI), 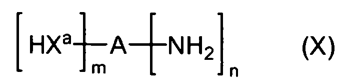 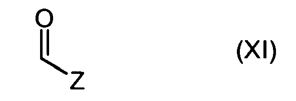 wobei
- X^{a}: für O oder S oder N-R^{6a} oder N-R⁷ steht,
wobei R^{6a} entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (II a) steht,

---E-NH₂ (II a)
- und m, n, A, R⁷, E und Z: die bereits genannten Bedeutungen aufweisen.

Detaillierte Angaben zu dieser Kondensation sind in WO 2007/036571 A1, insbesondere S.5 bis S.7, angegeben, deren Inhalt hiermit durch Bezugnahme eingeschlossen wird.

Als Amin **B** der Formel (X) sind in einer ersten Ausführungsform Amine **B1** der Formel (X a) geeignet, 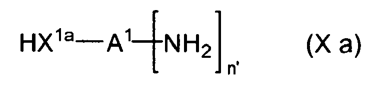 wobei
X^{1a} für O oder S oder N-R^{6a} oder N-R⁸ steht;
und n', A¹, R^{6a} und R⁸ die bereits genannten Bedeutungen aufweisen.

Aus der Umsetzung eines Amins **B1** der Formel (X a) mit einem Aldehyd **ALD** der Formel (XI) wird ein Aldimin **BA2a** der Formel (VIII) erhalten.

Geeignete Amine **B1** sind insbesondere
- Verbindungen mit einer oder zwei primären aliphatischen und einer sekundären Aminogruppe, wie beispielsweise N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, 3-(4-Aminobutyl)-piperidin, N-(2-Aminoethyl)piperazin, Diethylentriamin (DETA), Bis-hexamethylentriamin (BHMT), 3-(2-Aminoethyl)aminopropylamin; Di- und Triamine aus der Cyanoethylierung oder Cyanobutylierung und anschliessender Hydrierung von primären Mono- und Diaminen, beispielsweise N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, 3-Methylamino-1-pentylamin, 3-Ethylamino-1-pentylamin, 3-Butylamino-1-pentylamin, 3-Hexylamino-1-pentylamin, 3-(2-Ethylhexyl)-amino-1-pentylamin, 3-Dodecylamino-1-pentylamin, 3-Cyclohexylamino-1-pentylamin, Dipropylentriamin (DPTA), N3-(3-Aminopentyl)-1,3-pentandiamin, N5-(3-Aminopropyl)-2-methyl-1,5-pentandiamin, N5-(3-Amino-1-ethylpropyl)-2-methyl-1,5-pentandiamin, und Fettdiamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, wie sie beispielsweise unter dem Handelsnamen Duomeen^{®} von Akzo Nobel erhältlich sind; die Produkte aus der Michael-artigen Addition von aliphatischen primären Di- oder Triaminen mit Acrylnitril, Malein- oder Fumarsäurediestern, Citraconsäurediestern, Acryl- und Methacrylsäureestern, Acryl- und Methacrylsäureamiden und Itaconsäurediestern, umgesetzt im Molverhältnis 1:1;
- Hydroxyamine, wie beispielsweise 2-Aminoethanol, 2-Amino-1-propanol, 1-Amino-2-propanol, 3-Amino-1-propanol, 4-Amino-1-butanol, 4-Amino-2-butanol, 2-Amino-2-methylpropanol, 5-Amino-1-pentanol, 6-Amino-1-hexanol, 7-Amino-1-heptanol, 8-Amino-1-octanol, 10-Amino-1-decanol, 12-Amino-1-dodecanol, 4-(2-Aminoethyl)-2-hydroxyethylbenzol, 3-Aminomethyl-3,5,5-trimethyl-cyclohexanol; eine primäre Aminogruppe tragende Derivate von Glykolen wie Diethylenglykol, Dipropylenglykol, Dibutylenglykol und höheren Oligomeren und Polymeren dieser Glykole, beispielsweise 2-(2-Aminoethoxy)-ethanol, 2-(2-(2-Aminoethoxy)ethoxy)ethanol, α-(2-Hydroxymethylethyl)-ω-(2-aminomethylethoxy)-poly(oxy(methyl-1,2-ethandiyl)); eine Hydroxylgruppe und eine primäre Aminogruppen tragende Derivate von polyalkoxylierten drei- oder höherwertigen Alkoholen; Produkte aus der einfachen Cyanoethylierung und anschliessender Hydrierung von Glykolen, beispielsweise 3-(2-Hydroxyethoxy)-propylamin, 3-(2-(2-Hydroxyethoxy)-ethoxy)-propylamin und 3-(6-Hydroxyhexyloxy)-propylamin;
- Mercaptoamine, wie beispielsweise 2-Aminoethanthiol (Cysteamin), 3-Aminopropanthiol, 4-Amino-1-butanthiol, 6-Amino-1-hexanthiol, 8-Amino-1-octanthiol, 10-Amino-1-decanthiol und 12-Amino-1-dodecanthiol.

Als Amin **B1** bevorzugt sind N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, DETA, DPTA, BHMT und Fettdiamine wie N-Cocoalkyl-1,3-propandiamin, N-Oleyl-1,3-propandiamin, N-Soyaalkyl-1,3-propandiamin und N-Talgalkyl-1,3-propandiamin; Produkte aus der Michael-artigen Additionsreaktion von aliphatischen primären Diaminen mit Malein- und Fumarsäurediestern, Acryl- und Methacrylsäureestern, Acryl- und Methacrylsäureamiden, bevorzugt mit Maleinsäurediestern, insbesondere Maleinsäuredimethyl-, -diethyl-, -dipropyl- und -dibutylester, und mit Acrylsäureestern, insbesondere Acrylsäuremethylester, umgesetzt im Molverhältnis 1:1; sowie aliphatische Hydroxy- oder Mercaptoamine, in denen die primäre Aminogruppe von der Hydroxyl- oder Mercaptogruppe durch eine Kette von mindestens 5 Atomen, oder durch einen Ring, getrennt sind, insbesondere 5-Amino-1-pentanol, 6-Amino-1-hexanol und höhere Homologe davon, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin und höhere Oligo- und Polymere davon, 3-(2-Hydroxyethoxy)-propylamin, 3-(2-(2-Hydroxyethoxy)-ethoxy)-propylamin und 3-(6-Hydroxyhexyloxy)-propylamin.

Als Amin **B1** besonders bevorzugt sind Amine, welche ausgewählt sind aus der Gruppe bestehend aus N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, DETA, DPTA, BHMT, Fettdiamine, insbesondere N-Cocoalkyl-1,3-propandiamin, N-Oleyl-1,3-propandiamin, N-Soyaalkyl-1,3-propandiamin und N-Talgalkyl-1,3-propandiamin; 5-Amino-1-pentanol, 6-Amino-1-hexanol, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin, 3-(2-Hydroxyethoxy)-propylamin, 3-(2-(2-Hydroxyethoxy)-ethoxy)-propylamin und 3-(6-Hydroxyhexyloxy)-propylamin.

Als Amin **B1** am meisten bevorzugt sind Amine, welche ausgewählt sind aus der Gruppe bestehend aus 5-Amino-1-pentanol, 6-Amino-1-hexanol, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin, 3-(2-Hydroxyethoxy)-propylamin, 3-(2-(2-Hydroxyethoxy)-ethoxy)-propylamin und 3-(6-Hydroxyhexyloxy)-propylamin.

Als Amin **B** der Formel (X) ist in einer weiteren Ausführungsform ein Amin **B2** der Formel (X b) geeignet, 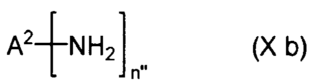 wobei n" und A² die bereits genannten Bedeutungen aufweisen.

Aus der Umsetzung eines Amins **B2** der Formel (X b) mit einem Aldehyd **ALD** der Formel (XI) wird ein Aldimin **BA2b** der Formel (IX) erhalten.

Als Amin **B2** geeignet sind insbesondere
- aliphatische, cycloaliphatische oder arylaliphatische Diamine, beispielsweise Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3-und 1,4-Diaminocyclohexan, Bis-(4-aminocyclohexyl)-methan (H₁₂-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)-cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 1,4-Diamino-2,2,6-trimethylcyclohexan (TMCDA), 1,8-Menthandiamin, 3,9-Bis-(3-aminopropyl)-2,4,8,10-tetraoxaspiro[5.5]undecan sowie 1,3- und 1,4-Xylylendiamin;
- Ethergruppen-haltige aliphatische Diamine, beispielsweise Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, Bis-(3-aminopropyl)polytetrahydrofurane und andere Polytetrahydrofuran-diamine mit Molekulargewichten bis 550, sowie Polyoxyalkylen-Diamine mit einem Molekulargewicht bis 600. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} ED-600, Jeffamine^{®} XTJ-568, Jeffamine^{®} XTJ-569, Jeffamine^{®} EDR-104, Jeffamine^{®} EDR-148, Jeffamine^{®} EDR-176; Polyetheramin D 230, Polyetheramin D 400, PC Amine^{®} DA 250 und PC Amine^{®} DA 400;
- aliphatische, cycloaliphatische oder arylaliphatische Triamine wie 4-Aminomethyl-1,8-octandiamin, 1,3,5-Tris-(aminomethyl)-benzol, 1,3,5-Tris-(aminomethyl)-cyclohexan, Tris-(2-aminoethyl)-amin, Tris-(2-aminopropyl)-amin, Tris-(3-aminopropyl)-amin;
- Polyoxyalkylen-Triamine mit einem Molekulargewicht bis 600, welche typischerweise Produkte aus der Aminierung von Polyoxyalkylen-Triolen darstellen und beispielsweise erhältlich sind unter dem Handelsnamen Jeffamine^{®} (von Huntsman), unter dem Namen Polyetheramin (von BASF) oder unter dem Namen PC Amine^{®} (von Nitroil), wie zum Beispiel Jeffamine^{®} T-403, Polyetheramin T403 und PC Amine^{®} TA 403;
- aromatische Di- und Triamine, wie beispielsweise 1,2-, 1,3- und 1,4-Phenylendiamin, 2,4- und 2,6-Toluylendiamin (TDA), 3,4-Toluylendiamin, 3,5-Dimethylthio-2,4- und -2,6-toluylendiamin, 3,5-Diethyl-2,4- und -2,6-toluylendiamin (DETDA), 2,4,6-Triethyl-1,3-phenylendiamin, 2,4,6-Triisopropyl-1,3-phenylendiamin, 3-Ethyl-5-methyl-2,4-toluylendiamin, 3,5-Diisopropyl-2,4-toluylendiamin, 3,5-Bis-(1-methylpropyl)-2,4-toluylendiamin, 3,5-Bis-(tert.butyl)-2,4-toluylendiamin, 3-Ethyl-5-isopropyl-2,4-toluylendiamin, 5-Isopropyl-2,4-toluylendiamin, 5-(tert.Butyl)-2,4-toluylendiamin, 4,6-Bis-(1-methylpropyl)-1,3-phenylendiamin, 4-Isopropyl-6-(tert.butyl)-1,3-phenylendiamin, 4-Ethyl-6-isopropyl-1,3-phenylendiamin, 4-Ethyl-6-(2-methylpropyl)-1,3-phenylendiamin, 4-Ethyl-6-(1-methylpropyl)-1,3-phenylendiamin, 4-Ethyl-6-(2-methylpropyl)-1,3-phenylendiamin, 4-Isopropyl-6-(1-methylpropyl)-1,3-phenylendiamin, 4-(tert.Butyl)-6-(2-methylpropyl)-1,3-phenylendiamin, 4-Cyclopentyl-6-ethyl-1,3-phenylendiamin, 4-Cyclopentyl-6-isopropyl-1,3-phenylendiamin, 4,6-Dicyclopentyl-1,3-phenylendiamin, 3-Isopropyl-2,6-toluylendiamin, 2-Methylpropyl-(4-chloro-3,5-diaminobenzoat), tert.Butyl-(4-chloro-3,5-diaminobenzoat), 2,6-Diaminopyridin, Melamin, 4,4'-, 2,4'- und 2,2'-Diaminodiphenylmethan (MDA), 3,3'-Dimethyl-4,4'-diaminodiphenylmethan, 3,3'-Dichloro-4,4'-diaminodiphenylmethan (MOCA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 3,3',5,5'-Tetra-(1-methylpropyl)-4,4'-diaminodiphenylmethan, 3,3'-Dimethyl-5,5'-di-tert.butyl-4,4'-diaminodiphenylmethan, 3,3'-Di-tert.butyl-4,4'-diaminodiphenylmethan, 4,4'-Diaminodiphenylsulfon (DDS), 4-Amino-N-(4-aminophenyl)-benzolsulfonamid, 5,5'-Methylendianthranilsäure, Dimethyl-(5,5'-Methylendianthranilat), 1,3-Propylen-bis-(4-aminobenzoat), 1,4-Butylen-bis-(4-aminobenzoat), Polytetramethylenoxid-bis-(4-aminobenzoat) (erhältlich als Versalink^{®} von Air Products) und 1,2-Bis-(2-aminophenylthio)-ethan;
- Polyamine mit primären aromatischen und primären aliphatischen Aminogruppen, insbesondere 4-Aminoethylanilin, 4-Aminomethylanilin, 4-[(4-Aminocyclohexyl)methyl]anilin, 2-Aminoethylanilin, 2-Aminomethylanilin, 2-[(4-Aminocyclohexyl)methyl]anilin und 4-[(2-Aminocyclohexyl)methyl]anilin.

Bevorzugt ist das Amin **B2** ausgewählt aus der Gruppe bestehend aus 1,6-Hexamethylendiamin, MPMD, DAMP, IPDA, TMD, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]-decan, 1,2-, 1,3- und 1,4-Diaminocyclohexan, 1,4-Diamino-2,2,6-trimethylcyclohexan, 3,6-Dioxaoctan-1,8-diamin, 4,7-Dioxadecan-1,10-diamin, 4-Aminomethyl-1,8-octandiamin, Polyoxyalkylen-Polyaminen mit zwei oder drei Aminogruppen und einem Molekulargewicht bis 600, insbesondere die unter dem Handelsnamen Jeffamine^{®} erhältlichen Typen D-230, D-400 und T-403 von Huntsman und dazu analoge Verbindungen von BASF oder Nitroil; 1,3- und 1,4-Phenylendiamin, 2,4- und 2,6-Toluylendiamin, 4,4'-, 2,4'- und 2,2'-Diaminodiphenylmethan, 3,3'-Dichlor-4,4'-diaminodiphenylmethan und Mischungen der genannten Polyamine.

Die Aldehyde **ALD** der Formel (XI) sind nicht enolisierbar. Aldimine mit Aldiminogruppen ausgehend von einem nicht enolisierbaren Aldehyd können keine Enaminogruppen bilden und stellen deshalb besonders gut blockierte Amine dar.

In einer bevorzugten Ausführungsform weist der Aldehyd ALD einen Rest Z¹ der Formel (III a) auf. Solche Aldehyde stellen Ester von aliphatischen, cycloaliphatischen oder arylaliphatischen 2,2-disubstituierten 3-Hydroxyaldehyden, wie beispielsweise 2,2-Dimethyl-3-hydroxypropanal, 2-Hydroxymethyl-2-methyl-butanal, 2-Hydroxymethyl-2-ethyl-butanal, 2-Hydroxymethyl-2-methylpentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit geeigneten Carbonsäuren dar, wobei als Carbonsäuren die beispielsweise die Folgenden geeignet sind: gesättigte aliphatische Carbonsäuren, wie Ameisensäure, Essigsäure, Propionsäure, Buttersäure, Isobuttersäure, Valeriansäure, Capronsäure, 2-Ethylcapronsäure, Oenanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure; einfach ungesättigte aliphatische Carbonsäuren wie Palmitoleinsäure, Ölsäure, Erucasäure; mehrfach ungesättigte aliphatische Carbonsäuren wie Linolsäure, Linolensäure, Elaeostearinsäure, Arachidonsäure; cycloaliphatische Carbonsäuren wie Cyclohexancarbonsäure, arylaliphatische Carbonsäuren wie Phenylessigsäure; aromatische Carbonsäuren wie Benzoesäure, Naphthoesäure, Toluylsäure, Anissäure; Isomere dieser Säuren; Fettsäuregemische aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl; sowie Dicarbonsäuremonoalkyl- und -arylester, wie sie aus der einfachen Veresterung von Dicarbonsäuren wie Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, mit Alkoholen wie Methanol, Ethanol, Propanol, Butanol, höheren Homologen und Isomeren dieser Alkohole erhalten werden. Bevorzugt sind Carbonsäuren mit mindestens 7 C-Atomen, insbesondere solche mit 12 bis 31 C-Atomen, insbesondere Laurinsäure, Myristinsäure, Palmitinsäure, Stearinsäure und Ölsäure. Speziell bevorzugt ist Laurinsäure.

In einer weiteren bevorzugten Ausführungsform weist der Aldehyd **ALD** einen Rest Z¹ der Formel (III b) auf. Solche Aldehyde stellen Ether von aliphatischen, cycloaliphatischen oder arylaliphatischen 2,2-disubstituierten 3-Hydroxyaldehyden mit Alkoholen oder Phenolen der Formel R⁴-OH dar. Bevorzugte Aldehyde **ALD** in Form solcher Ether sind 2,2-Dimethyl-3-phenoxypropanal, 3-Cyclohexyloxy-2,2-dimethyl-propanal, 2,2-Dimethyl-3-(2-ethylhexyloxy)-propanal, 2,2-Dimethyl-3-lauroxy-propanal und 2,2-Dimethyl-3-stearoxy-propanal.

In einer weiteren bevorzugten Ausführungsform weist der Aldehyd **ALD** einen Rest Z¹ der Formel (III c) auf. Solche Aldehyde sind insbesondere erhältlich als Produkt einer Mannich-Reaktion oder einer der Mannich-Reaktion analogen α-Aminoalkylierung, wie sie aus der Fachliteratur bekannt sind; ein solcher Aldehyd kann deshalb auch als Mannich-Base bezeichnet werden. Dabei werden ein sekundärer Aldehyd, insbesondere Isobutyraldehyd, ein weiterer Aldehyd, insbesondere Formaldehyd, und ein sekundäres aliphatisches Amin unter Wasserabspaltung zu einem Aldehyd **ALD** umgesetzt. Besonders geeignete Aldehyde **ALD** in Form einer solchen Mannich-Base sind 2,2-Dimethyl-3-dimethylamino-propanal, 2,2-Dimethyl-3-diethylamino-propanal, 2,2-Dimethyl-3-dibutylamino-propanal, 2,2-Dimethyl-3-(N-pyrrolidino)-propanal, 2,2-Dimethyl-3-(N-piperidino)-propanal, 2,2-Dimethyl-3-(N-morpholino)-propanal, 2,2-Dimethyl-3-(N-(2,6-dimethyl)morpholino)-propanal, 2,2-Dimethyl-3-(N-benzylmethylamino)-propanal, 2,2-Dimethyl-3-(N-benzylisopropylamino)-propanal und 2,2-Dimethyl-3-(N-cyclohexylmethylamino)-propanal.

In einer weiteren bevorzugten Ausführungsform weist der Aldehyd **ALD** einen Rest Z¹ der Formel (III d) auf. Solche Aldehyde sind insbesondere als Produkt einer Mannich-Reaktion erhältlich - auf dieselbe Weise wie die Aldehyde **ALD** mit einem Rest Z¹ der Formel (III c) - wobei aber anstelle eines sekundären aliphatischen Amins ein Amid, Lactam, Carbamat oder Imid eingesetzt wird. Besonders geeignete Aldehyde **ALD** mit einem Rest Z¹ der Formel (III d) sind N-(2,2-Dimethyl-3-oxopropyl)-N-methylacetamid, N-(2,2-Dimethyl-3-oxopropyl)-N-butylacetamid, N-(2,2-Dimethyl-3-oxopropyl)-N-(2-ethylhexyl)acetamid, N-(2,2-Dimethyl-3-oxopropyl)-N-benzylacetamid, N-(2,2-Dimethyl-3-oxopropyl)-N-methylbutyramid, N-(2,2-Dimethyl-3-oxopropyl)-N-methyl-(2-ethylcapronamid), N-(2,2-Dimethyl-3-oxopropyl)-N-methylbenzamid, O-Ethyl-N-(2,2-dimethyl-3-oxopropyl)-N-methylcarbamat, N-(2,2-Dimethyl-3-oxopropyl)-pyrrolidin-2-on, N-(2,2-Dimethyl-3-oxopropyl)-piperidin-2-on, N-(2,2-Dimethyl-3-oxopropyl)-azepan-2-on, N-(2,2-Dimethyl-3-oxopropyl)-oxazolidin-2-on, N-(2,2-Dimethyl-3-oxopropyl)-pyrrolidin-2,5-dion und N-(2,2-Dimethyl-3-oxopropyl)-phthalimid.

In einer weiteren bevorzugten Ausführungsform weist der Aldehyd **ALD** einen Rest Z² auf. Solche Aldehyde **ALD** sind beispielsweise aromatische Aldehyde, wie Benzaldehyd, 2- und 3- und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd, Chinolin-2-carbaldehyd und dessen 3-, 4-, 5-, 6-, 7- und 8-Stellungsisomere, sowie Anthracen-9-carbaldehyd; sowie weiterhin Glyoxal, Glyoxalsäureester wie zum Beispiel Glyoxalsäuremethylester, Zimtaldehyd und substituierte Zimtaldehyde.

Als Aldehyd ALD der Formel (XI) bevorzugt sind 2,2-Dimethyl-3-lauroyloxy-propanal, 2,2-Dimethyl-3-myristoyloxy-propanal, 2,2-Dimethyl-3-palmitoyloxy-propanal, 2,2-Dimethyl-3-stearoyloxy-propanal und 2,2-Dimethyl-3-oleyloxy-propanal.

Als Aldehyd **ALD** der Formel (XI) am meisten bevorzugt ist 2,2-Dimethyl-3-lauroyloxy-propanal.

In einer Ausführungsform ist das blockierte Amin **BA** ein polymeres blockiertes Amin **PBA,** welches ein Polymer mit mindestens zwei blockierten, hydrolytisch aktivierbaren Aminogruppen darstellt.

Die blockierten, hydrolytisch aktivierbaren Aminogruppen des polymeren blockierten Amins **PBA** sind insbesondere ausgewählt aus der Gruppe bestehend aus Enaminogruppen, Oxazolidinogruppen, Ketiminogruppen und Aldiminogruppen.

Ein polymeres blockiertes Amin **PBA** ist in einer Ausführungsform erhältlich ausgehend von einem Polymer mit endständigen Aminogruppen, wie beispielsweise einem höheren Oligomer von 5,8-Dioxadodecan-3,10-diamin, einem Polytetrahydrofuran-diamin sowie insbesondere ausgehend von Polyoxyalkylen-Di- und Triaminen. Letztere stellen typischerweise Produkte aus der Aminierung von Polyoxyalkylen-Di- und Triolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-2000, Jeffamine^{®} D-4000, Jeffamine^{®} XTJ-511, Jeffamine^{®} ED-900, Jeffamine^{®} ED-2003, Jeffamine^{®} XTJ-523, Jeffamine^{®} XTJ-536, Jeffamine^{®} XTJ-542, Jeffamine^{®} XTJ-559, und Polyetheramin D 2000, PC Amine^{®} DA 650 und PC Amine^{®} DA 2000. Insbesondere geeignete Polyoxyalkylen-Triamine sind Jeffamine^{®} T-3000, Jeffamine^{®} T-5000, Polyetheramin T5000 und PC Amine^{®} TA 5000. Die Aminogruppen solcher Polymere mit endständigen Aminogruppen können auf dieselbe Weise in blockierte Aminogruppen überführt werden wie bereits vorgängig beschrieben.

In einer weiteren Ausführungsform ist ein polymeres blockiertes Amin **PBA** insbesondere erhältlich aus der Umsetzung eines Isocyanatgruppen aufweisenden Polyurethanpolymers **PUP** mit einem blockierten Amin **BA,** welches mindestens eine blockierte Aminogruppe und mindestens eine Reaktivgruppe **R,** welche ausgewählt ist aus der Gruppe bestehend aus Hydroxylgruppe, Mercaptogruppe und sekundäre Aminogruppe, aufweist.

Das Isocyanatgruppen aufweisende Polyurethanpolymer **PUP** ist insbesondere erhältlich aus der Umsetzung von mindestens einem Polyol mit mindestens einem Polyisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO/OH-Verhältnis" wird das Verhältnis der Anzahl der eingesetzten Isocyanatgruppen zu der Anzahl der eingesetzten Hydroxylgruppen verstanden. Bevorzugt verbleibt im Polyurethanpolymer **PUP** nach der Umsetzung aller Hydroxylgruppen des Polyols ein Gehalt an freien Isocyanatgruppen von 0.5 bis 15 Gewichts-%, besonders bevorzugt von 0.5 bis 5 Gewichts-%.

Gegebenenfalls kann das Polyurethanpolymer PUP unter Mitverwendung von Weichmachern hergestellt werden, wobei die verwendeten Weichmacher keine gegenüber Isocyanaten reaktive Gruppen enthalten.

Als Polyol für die Herstellung des Polyurethanpolymers PUP können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen, wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxyethylen- und Polyoxypropylendi- und -triole.
   Speziell geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.
   Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und
   dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
   Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestem derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} (früher Hycar^{®}) CTBN und CTBNX und ETBN von Nanoresins AG, bzw. Emerald Performance Materials LLC) hergestellt werden können; sowie hydrierte polyhydroxyfunktionelle Polymere oder Copolymere von Dienen.

Diese genannten Polyole weisen bevorzugt ein mittleres Molekulargewicht von 250 bis 30'000 g/mol, insbesondere von 400 bis 20'000 g/mol, und weisen bevorzugt eine mittlere OH-Funktionalität im Bereich von 1.6 bis 3 auf.

Als Polyole bevorzugt sind Polyether-, Polyester-, Polycarbonat- und Polyacrylatpolyole, bevorzugt Di- und Triole.

Besonders bevorzugt sind Polyetherpolyole, insbesondere Polyoxypropylen- und Polyoxypropylenpolyoxyethylenpolyole, sowie flüssige Polyesterpolyole und Polyetherpolyesterpolyole.

Besonders bevorzugt sind weiterhin amorphe, teilkristalline und kristalline Polyester- und Polycarbonatdiole mit einem Schmelzpunkt im Bereich von 40 °C bis 80 °C, insbesondere 50 °C bis 70 °C, insbesondere Adipinsäure/Hexandiol-Polyester, Azelainsäure/Hexandiol-Polyester, Dodecandicarbonsäure/Hexandiol-Polyester und Polycarbonatdiole auf der Basis von Hexandiol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers **PUP** mitverwendet werden. Ebenso können kleine Mengen an Polyolen mit einer mittleren OH-Funktionalität von mehr als 3 mitverwendet werden, beispielsweise Zuckerpolyole.

Als Polyisocyanat für die Herstellung des Isocyanatgruppen aufweisenden Polyurethanpolymers **PUP** werden aromatische oder aliphatische Polyisocyanate, insbesondere die Diisocyanate, eingesetzt.

Als aromatische Polyisocyanate eignen sich insbesondere monomere Di- oder Triisocyanate wie 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol, Tris-(4-isocyanatophenyl)-methan, Tris-(4-isocyanatophenyl)-thiophosphat, Oligomere und Polymere der vorgenannten Isocyanate, sowie beliebige Mischungen der vorgenannten Isocyanate. Bevorzugt sind MDI und TDI.

Als aliphatische Polyisocyanate eignen sich insbesondere monomere Di- oder Triisocyanate wie 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate wie 3,6-Bis-(9-isocyanatononyl)-4,5-di-(1-heptenyl)-cyclohexen (Dimeryldiisocyanat), α,α,α',α',α",α"-Hexamethyl-1,3,5-mesitylentriisocyanat, Oligomere und Polymere der vorgenannten Isocyanate, sowie beliebige Mischungen der vorgenannten Isocyanate. Bevorzugt sind HDI und IPDI.

Das Polyurethanpolymer **PUP** weist ein mittleres Molekulargewicht von vorzugsweise 500 g/mol oder darüber auf. Insbesondere weist das Polyurethanpolymer **PUP** ein mittleres Molekulargewicht von 1000 bis 30'000 g/mol, bevorzugt von 2000 bis 10'000 g/mol, auf. Weiterhin weist das Polyurethanpolymer **PUP** bevorzugt eine mittlere NCO-Funktionalität im Bereich von 1.7 bis 3, insbesondere 1.8 bis 2.5, auf.

Zur Umsetzung mit dem Isocyanatgruppen aufweisenden Polyurethanpolymer **PUP** werden bevorzugt solche blockierten Amine **BA** eingesetzt, welche neben einer Reaktivgruppe **R** nur eine oder zwei, bevorzugt eine, blockierte Aminogruppe aufweisen.

Das Isocyanatgruppen aufweisende Polyurethanpolymer **PUP** und das blockierte Amin **BA,** welches mindestens eine blockierte Aminogruppe und eine Reaktivgruppe **R** aufweist, werden so miteinander umgesetzt, dass die Reaktivgruppe **R** stöchiometrisch oder im stöchiometrischen Überschuss in Bezug auf die Isocyanatgruppen vorliegt, so dass das resultierende polymere blockierte Amin **PBA** frei ist von Isocyanatgruppen.

Für den Fall, dass Reaktivgruppen **R** in Form von Hydroxyl- oder Mercaptogruppen vorhanden sind, wird die Umsetzung bevorzugt bei einer Temperatur oberhalb von Raumtemperatur durchgeführt, insbesondere bei einer Temperatur im Bereich von 50 °C bis 100 °C, gegebenenfalls in Anwesenheit eines geeigneten Katalysators.

Als polymeres blockiertes Amin **PBA** bevorzugt ist in einer Ausführungsform ein Oxazolidinogruppen aufweisendes polymeres blockiertes Amin **PBA1,** welches frei ist von Isocyanatgruppen, Reaktivgruppen **R** und primären Aminogruppen.

Als polymeres blockiertes Amin **PBA** bevorzugt ist in einer weiteren Ausführungsform ein Aldiminogruppen der Formel (XII) aufweisendes polymeres blockiertes Amin **PBA2,** welches frei ist von Isocyanatgruppen, Reaktivgruppen **R** und primären Aminogruppen.

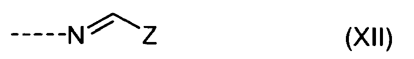

Hierbei weist Z die bereits genannte Bedeutung auf.

Bei den Aldiminogruppen der Formel (XII) handelt es sich um nicht zur Enamin-Bildung fähige Aldiminogruppen.

Ein polymeres blockiertes Amin **PBA2** ist in einer Ausführungsform insbesondere erhältlich aus der Umsetzung von mindestens einem Isocyanatgruppen aufweisenden Polyurethanpolymer **PUP** mit mindestens einem Aldimin **BA2a** der Formel (VIII).

In einer weiteren Ausführungsform ist polymeres blockiertes Amin **PBA2** insbesondere erhältlich aus der Kondensationsreaktion von mindestens einem Polymer mit mindestens zwei primären Aminogruppen mit mindestens einem Aldehyd **ALD** der Formel (XI).

Als polymeres blockiertes Amin **PBA** am meisten bevorzugt ist ein polymeres blockiertes Amin **PBA2',** welches frei ist von Isocyanatgruppen, Reaktivgruppen **R** und primären Aminogruppen, und welches Aldiminogruppen der Formel (XII a) aufweist.

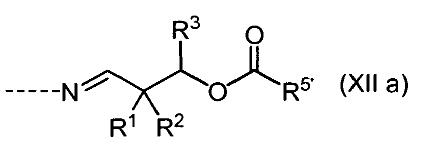

Hierbei weisen R¹, R², R³ und R^{5'} die bereits genannten Bedeutungen auf.

Polymere blockierte Amine **PBA2'** weisen den Vorteil auf, dass sie geruchsarm oder geruchsfrei sind und dass der daraus freisetzbare Aldehyd aufgrund seines hohen Molekulargewichts ebenfalls geruchsarm oder geruchsfrei ist. Weist der Rest R^{5'} mindestens 11 C-Atomen auf, sind sie geruchsfrei und der daraus freisetzbare Aldehyd ist ebenfalls geruchsfrei.

Mit härtbaren Zusammensetzungen, welche ein polymeres blockiertes Amin **PBA** ausgehend von einem Polyurethanpolymer **PUP** enthalten, sind ausgehärtete Materialien erhältlich, welche über eine hohe Dehnbarkeit und über eine hohe Festigkeit verfügen. Solche Materialien sind besonders geeignet als elastische Klebstoffe.

Als "hohe Dehnbarkeit" wird im vorliegenden Dokument eine Bruchdehnung von mindestens 300%, bevorzugt mindestens 400 %, besonders bevorzugt mindestens 450 %, gemessen nach DIN EN 53504, bezeichnet. Als "hohe Festigkeit" wird im vorliegenden Dokument eine Zugfestigkeit von mindestens 3.0 MPa, bevorzugt mindestens 4.0 MPa, besonders bevorzugt mindestens 4.5 MPa, gemessen nach DIN EN 53504, bezeichnet.

Die härtbare Zusammensetzung umfasst neben mindestens einem blockierten Amin **BA** weiterhin mindestens ein bei Raumtemperatur festes, oberflächendesaktiviertes Polyisocyanat **DI.**

Bevorzugt liegt das oberflächendesaktivierte Polyisocyanat **DI** in feinteiliger Form vor, wobei als "feinteilig" eine Substanz mit einem mittleren Teilchendurchmesser von kleiner als 120 µm bezeichnet wird

Besonders bevorzugt liegt der mittlere Teilchendurchmesser des oberflächendesaktivierten Polyisocyanates **DI** im Bereich von 0.01 bis 100 µm, bevorzugt 0.1 bis 50 µm, besonders bevorzugt 0.3 bis 30 µm.

Bei Raumtemperatur feste, oberflächendesaktivierte Polyisocyanate sind aus dem Stand der Technik bekannt, beispielsweise aus EP 0 062 780 A1, EP 0 100 508 A2 und EP 0 153 579 A2.

Dem oberflächendesaktivierten Polyisocyanat **DI** liegt ein bei Raumtemperatur festes Polyisocyanat zugrunde, dessen Schmelzpunkt deutlich über Raumtemperatur liegt. Vorteilhaft weist das bei Raumtemperatur feste Polyisocyanat einen Schmelzpunkt von mindestens 40 °C, bevorzugt mindestens 80 °C, besonders bevorzugt mindestens 120 °C, auf.

Insbesondere ist das bei Raumtemperatur feste Polyisocyanat ausgewählt aus der Gruppe bestehend aus Naphthalin-1,5-diisocyanat (NDI), 3,3'-Dimethyl-4,4'-diisocyanatodiphenyl (TODI), 1,4-Phenylendiisocyanat , dem Isocyanurat von 1-Isocyanato-3,3,5-trimethyl-5-isocyanatomethyl-cyclohexan, dem Uretdion von 4,4'-Diphenylmethandiisocyanat, dem Uretdion von 2,4-Toluylendiisocyanat und dem Harnstoff von 2,4-Toluylendiisocyanat. Besonders bevorzugt sind Naphthalin-1,5-diisocyanat (NDI), das Uretdion von 2,4-Toluylendiisocyanat sowie der Harnstoff von 2,4-Toluylendiisocyanat.

Das bei Raumtemperatur feste Polyisocyanat liegt bevorzugt in feinteiliger Form vor, mit einem mittleren Teilchendurchmesser im Bereich von 0.01 bis 100 µm, bevorzugt 0.1 bis 50 µm, besonders bevorzugt 0.3 bis 30 µm.

Ein kommerziell erhältliches, feinteiliges Uretdion von 2,4-TDI ist beispielsweise Addolink^{®} TT (Rhein Chemie).

Das oberflächendesaktivierte Polyisocyanat **DI** besteht aus Teilchen von bei Raumtemperatur festem Polyisocyanat, deren Oberfläche mit einer mehr oder weniger dicken Schicht einer Substanz bedeckt ist, welche bei Raumtemperatur oder leicht erhöhter Temperatur ausreichend undurchlässig und genug beständig ist, um die Isocyanatgruppen im Innern des Teilchens dauerhaft einzuschliessen und so gegenüber chemischen Reaktionspartnern, insbesondere Verbindungen mit aktiven Wasserstoffatomen, unzugänglich zu machen, sie also zu "desaktivieren". Bei Erwärmung des oberflächendesaktivierten Polyisocyanats **DI** auf eine Temperatur von mindestens 60 °C, insbesondere mindestens 80 °C, wird die Schicht auf den Polyisocyanat-Teilchen soweit beschädigt, dass die Isocyanatgruppen im Teilcheninnem für chemische Reaktionspartner zugänglich werden, sie also "aktiviert" werden.

Das oberflächendesaktivierte Polyisocyanat **DI** wird insbesondere erhalten aus der Umsetzung des ihm zugrunde liegenden bei Raumtemperatur festen Polyisocyanats mit einer Substanz, welche mindestens eine mit Isocyanatgruppen reaktionsfähige Gruppe aufweist. Durch eine chemische Reaktion auf der Oberfläche der Polyisocyanat-Teilchen wird eine bei Raumtemperatur oder leicht erhöhter Temperatur beständige, d.h. undurchlässige und weitgehend unlösliche, Schicht ("Schutzschicht") gebildet. Eine für diese Umsetzung geeignete Substanz, im Folgenden als "Substanz zur Oberflächendesaktivierung" bezeichnet, ist insbesondere ausgewählt aus der Gruppe bestehend aus Wasser, primären und sekundären aliphatischen Aminen, Aminoamiden, Hydrazinen, Hydraziden, Phenolen, Carbonsäuren, Amidinen und Guanidinen.

Als Substanz zur Oberflächendesaktivierung bevorzugt sind primäre und sekundäre Amine, insbesondere primäre Polyamine, insbesondere die als Amine **B2** der Formel (X b) genannten primären Amine, weiterhin Fettamine, Polyalkylenamine, Polyamidoamine, sowie Carbonsäuresalze dieser Amine. Die mit diesen Substanzen gebildete Schutzschicht weist dabei Harnstoffgruppen auf.

Als Fettamine werden von Fettsäuren und Fettsäuregemischen abgeleitete Amine bezeichnet, wie zum Beispiel Laurylamin, Myristylamin, Palmitinamin, Stearylamin, Oleylamin, Cocoalkylamin, C₁₆-C₂₂-Alkylamin, Soyaalkylamin, Oleylamin und Talgalkylamin, erhältlich beispielsweise unter den Handelsnamen Armeen^{®} (von Akzo Nobel) oder Rofamin^{®} (von Ecogreen Oleochemicals), sowie weiterhin durch Cyanoethylierung und nachfolgender Reduktion von Fettaminen erhältliche Diamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, erhältlich beispielsweise als Duomeen^{®} CD, Duomeen^{®} M, Duomeen^{®} O, Duomeen^{®} OV oder Duomeen^{®} T (Akzo Nobel), sowie weiterhin von Fettaminen abgeleitete Triamine und Tetramine, wie Cocoalkyldipropylentriamin, Oleyldipropylentriamin, Talgalkyldipropylentriamin, Oleyltripropylentetramin und Talgalkyltripropylentetramin, erhältlich beispielsweise als Triameen^{®} C, Triameen^{®} OV, Triameen^{®} T, Tetrameen^{®} OV und Tetrameen^{®} T (Akzo Nobel).

Als Polyalkylenamine werden oligomere Ethylenamine mit anteilig sekundären Aminogruppen bezeichnet, insbesondere in der Form von technischen Gemischen, wie zum Beispiel Diethylentriamin (DETA), Triethylentetramin (TETA), Tetraethylenpentamin (TEPA), Pentaethylenhexamin (PEHA).

Als Polyamidoamine werden Substanzen mit mindestens einer Amido- und mindestens einer Aminogruppe bezeichnet, insbesondere Reaktionsprodukte aus einer ein- oder mehrwertigen Carbonsäure, beziehungsweise deren Ester oder Anhydride, und einem aliphatischen, cycloaliphatischen oder aromatischen Polyamin, wobei das Polyamin im stöchiometrischen Überschuss eingesetzt wird. Als mehrwertige Carbonsäure wird üblicherweise eine sogenannte Dimerfettsäure verwendet, und als Polyamin wird üblicherweise ein Polyalkylenamin wie beispielsweise Diethylentriamin (DETA) oder Triethylentetramin (TETA) verwendet. Kommerziell erhältliche Polyamidoamine sind beispielsweise Versamid^{®} 100, 125, 140 und 150 (von Cognis), Aradur^{®} 223, 250 und 848 (von Huntsman), Euretek^{®} 505, 510, 514 S, 530, 531, 540, 541, 545, 547, 549, 3607 (von Huntsman) und Beckopox^{®} EH 651, EH 654, EH 655, EH 661 und EH 663 (von Cytec).

Als Substanz zur Oberflächendesaktivierung besonders bevorzugt sind Polyoxyalkylen-Di- und Triamine, insbesondere Jeffamine^{®} D-230, Jeffamine^{®} D-400 und Jeffamine^{®} T-403 (von Huntsman); sowie weiterhin kurzkettige aliphatische primäre Diamine, insbesondere Ethylendiamin, 1,2-Propandiamin, 1,3-Propandiamin, 1,4-Butandiamin und 1,6-Hexandiamin; cycloaliphatische primäre Diamine, insbesondere Bis-(4-aminocyclohexyl)-methan, Bis-(4-amino-3-methylcyclohexyl)-methan und 1-Amino-3-aminomethyl-3,5,5-trimethylcyclohexan; Fettamine, insbesondere Stearylamin und Oleylamin; Polyalkylenamine, insbesondere Diethylentriamin, Triethylentetramin und Tetraethylenpentamin; sowie Polyamidoamine, insbesondere aus Dimerfettsäuren und Diethylentriamin oder Triethylentetramin.

Als oberflächendesaktiviertes Polyisocyanat DI besonders bevorzugt ist das Uretdion von 2,4-TDI, welches mittels einem Amin **B2** der Formel (X b), insbesondere einem Polyoxyalkylen-Diamin oder -Triamin, oberflächendesaktiviert ist.

Zur Umsetzung mit dem festen Polyisocyanat wird die Substanz zur Oberflächendesaktivierung vorteilhaft in einer solchen Menge eingesetzt, dass auf 100 Isocyanatgruppen 0.5 bis 20, bevorzugt 1 bis 15, besonders bevorzugt 3 bis 12, gegenüber Isocyanatgruppen reaktive Gruppen vorhanden sind.

Die Umsetzung des bei Raumtemperatur festen Polyisocyanats mit der Substanz zur Oberflächendesaktivierung wird bei einer Temperatur unterhalb des Schmelzpunkts des bei Raumtemperatur festen Polyisocyanats, bevorzugt bei einer Temperatur unterhalb von 50 °C, durchgeführt, wobei das Polyisocyanat in einem flüssigen Medium dispergiert vorliegt, in welchem die auf der Oberfläche der Polyisocyanat-Teilchen gebildete Schicht bei dieser Temperatur weitgehend unlöslich ist. Als flüssiges Medium geeignet sind insbesondere Weichmacher, insbesondere Carbonsäureester wie Phthalate, insbesondere Dioctylphthalat, Diisononylphthalat oder Diisodecylphthalat, Adipate, insbesondere Dioctyladipat, Azelate und Sebacate, organische Phosphor- und Sulfonsäureester oder Polybutene. Als flüssiges Medium weiterhin geeignet sind Polyole, wie sie vorgängig zur Herstellung eines Polyurethanpolymers **PUP** erwähnt wurden. Als flüssiges Medium weiterhin geeignet sind die vorgängig beschriebenen polymeren blockierten Amine **PBA,** insbesondere die vorgängig beschriebenen polymeren blockierten Amine **PBA1** und die vorgängig beschriebenen polymeren blockierten Amine **PBA2.** Als flüssiges Medium weiterhin geeignet sind sogenannte gecappte Polyole, also Polyole, deren Hydroxylgruppen umgesetzt wurden, beispielsweise zu Ester- oder insbesondere zu Ethergruppen. Weiterhin als flüssiges Medium geeignet sind Polyurethanpolymere, deren Isocyanatgruppen mit beispielsweise monofunktionellen Alkoholen, Thiolen oder primären oder sekundären Aminen umgesetzt sind, sowie weiterhin Polymere, welche weitgehend frei sind von Isocyanatgruppen oder gegenüber Isocyanatgruppen reaktiven Gruppen.

Es ist möglich, das bei Raumtemperatur feste Polyisocyanat, welches dem oberflächendesaktivierten Polyisocyanat **DI** zugrunde liegt, vor der Oberflächendesaktivierung mit einem zweiten, bei Raumtemperatur flüssigen Polyisocyanat so zu behandeln, dass dieses zweite Polyisocyanat die Oberfläche des bei Raumtemperatur festen Polyisocyanates benetzt bzw. überzieht, und erst anschliessend die Oberflächendesaktivierung mit der Substanz zur Oberflächendesaktivierung durchzuführen. Auf diese Weise wird die oberflächendesaktivierende Schicht aus dem zweiten, bei Raumtemperatur flüssigen Polyisocyanat aufgebaut.

Das blockierte Amin **BA** und das oberflächendesaktivierte Polyisocyanat **DI** liegen in der härtbaren Zusammensetzung vorteilhaft in einer solchen Menge vor, dass das Verhältnis zwischen den blockierten Aminogruppen und den Isocyanatgruppen 0.1 bis 1.1, bevorzugt 0.2 bis 1.1, besonders bevorzugt 0.3 bis 1.0, beträgt.

Die härtbare Zusammensetzung kann neben mindestens einem blockierten Amin **BA** und mindestens einem oberflächendesaktivierten Polyisocyanat **DI** weitere Bestandteile enthalten.

Die härtbare Zusammensetzung enthält gegebenenfalls Wasser oder eine Wasser erzeugende Substanz, insbesondere in einer solchen Menge, dass das Verhältnis zwischen der Anzahl Wassermoleküle und der Anzahl der blockierten Aminogruppen mehr als 0.25, bevorzugt mindestens 0.5, beträgt. Eine solche Zusammensetzung kann als heisshärtende Zusammensetzung verwendet werden.

Das Wasser kann entweder in freier Form vorliegen, oder es kann an ein Trägermaterial gebunden sein. Die Bindung an ein gegebenenfalls vorhandenes Trägermaterial ist reversibel, das heisst, das Wasser ist für die Reaktion mit dem blockierten Amin **BA** zugänglich.

Als Trägermaterialien für Wasser geeignet sind poröse Materialien, welche Wasser in Hohlräume einschliessen, insbesondere Kieselgur und Molekularsiebe. Weitere geeignete Trägermaterialien sind solche, die Wasser in nicht stöchiometrischen Mengen aufnehmen und eine pastöse Konsistenz haben oder Gels bilden, beispielsweise Kieselgele, Tone, Polysaccharide oder Polyacrylsäuren, die auch unter dem Begriff "Super-Absorber" bekannt sind und beispielsweise in der Herstellung von Hygieneartikeln zum Einsatz kommen. Weiterhin geeignete Trägermaterialien sind Polymere, in welchen Wasser so emulgiert werden kann, dass eine stabile Emulsion entsteht.

Weiterhin geeignete Formen von an ein Trägermaterial gebundenem Wasser sind beispielsweise Hydrate und Aquakomplexe, insbesondere anorganische Verbindungen, die Wasser koordinativ gebunden oder als Kristallwasser enthalten. Beispiele für Hydrate sind Na₂SO₄·10H₂O, CaSO₄·2H₂O, CaSO₄·½H₂O, Na₂B₄O₇·10H₂O, MgSO₄7H₂O. Beispiele für Aquakomplexe sind die Hexaquakomplexe von Eisen (II), Eisen (III), Kobalt (II), Kobalt (III) und Nickel (II), sowie gemischte Komplexe wie [(H₂O)₄Co(NH₃)₂]³⁺ oder [CI(H₂O)₃Co(NH₃)₂]²⁺.

Als Wasser erzeugende Substanzen sind insbesondere solche Substanzen geeignet, welche Wasser bei Erwärmung auf eine Temperatur im Bereich von 60 °C bis 160 °C, bevorzugt zwischen 80 °C und 140 °C, besonders bevorzugt zwischen 90 °C und 130 °C, erzeugen. Solche Substanzen sind insbesondere Borsäure, Aluminiumhydroxide und Kieselsäuren.

Die härtbare Zusammensetzung kann aber auch nur wenig Wasser enthalten oder weitgehend frei sein von Wasser.

Insbesondere für den Fall, dass die in der härtbaren Zusammensetzung vorhandenen blockierten Aminogruppen in Form von Enaminogruppen und/oder in der Form von zur Enamin-Bildung fähigen Ketimino- oder Aldiminogruppen vorliegen, ist die härtbare Zusammensetzung verwendbar als heisshärtende Zusammensetzung, auch wenn sie frei ist von Wasser oder Wasser in einer solchen Menge enthält, das das Verhältnis zwischen der Anzahl Wassermoleküle und der Anzahl der blockierten Aminogruppen höchstens 0.25 beträgt.

Für den Fall, dass die in der härtbaren Zusammensetzung vorhandenen blockierten Aminogruppen in Form von Oxazolidinogruppen oder in Form von nicht zur Enamin-Bildung fähige Aldiminogruppen vorliegen, und die Zusammensetzung frei ist von Wasser oder Wasser in einer solchen Menge enthält, dass das Verhältnis zwischen der Anzahl Wassermoleküle und der Anzahl der blockierten Aminogruppen höchstens 0.1 beträgt, ist diese verwendbar als hitzeaktivierbare Zusammensetzung.

Die härtbare Zusammensetzung enthält gegebenenfalls weiterhin mindestens ein Polyol **P.** Als Polyol **P** sind dieselben Polyole geeignet, wie sie bereits als geeignet zur Herstellung eines Isocyanatgruppen aufweisenden Polyurethanpolymers **PUP** erwähnt wurden.

Insbesondere eine Zusammensetzung, welche verwendbar ist als hitzaktivierbare Zusammensetzung, enthält gegebenenfalls mindestens ein Polyol **P.**

Weiterhin enthält die härtbare Zusammensetzung insbesondere mindestens ein Material, welches die Wärmeleitfähigkeit der Zusammensetzung erhöht und/oder es aufgrund seiner piezoelektrischen, ferromagnetischen oder superparamagnetischen Eigenschaften erlaubt, die Zusammensetzung durch Anlegen von magnetischen und/oder elektrischen Wechselfeldern, insbesondere Mikrowellen oder Induktion, zu erwärmen. Dies erlaubt es, die Zusammensetzung, welche im allgemeinen eine eingeschränkte Wärmeleitfähigkeit aufweist, schneller zu erwärmen und damit beschleunigt auszuhärten. Als derartiges Material geeignet sind insbesondere Graphit, leitfähige Russe und Metallpulver; Piezoelektrika wie Quarz, Turmalin, Bariumtitanat, Lithiumsulfat, Kalium(Natrium)tartrat, Ethylendiamintartrat und Blei-Zirkonium-Titanat; Ferromagnetika oder Superparamagnetika wie die Metalle Aluminium, Kobalt, Eisen, Nickel und deren Legierungen, Metalloxide vom Typ n-Maghemit (γ-Fe₂O₃), n-Magnetit (Fe₃O₄), sowie Ferrite der allgemeinen Formel MFe₂O₄, wobei M für zweiwertige Metalle aus der Gruppe Kupfer, Zink, Kobalt, Nickel, Magnesium, Calcium oder Cadmium steht. Bevorzugt liegt dieses Material feinteilig vor, wobei der mittlere Teilchendurchmesser unter 120 µm, insbesondere unter 50 µm, liegt. Für die Ausnutzung des superparamagnetischen Effekts liegt der mittlere Teilchendurchmesser bevorzugt unter 50 nm, insbesondere unter 30 nm.

Weiterhin kann die härtbare Zusammensetzung insbesondere die in Polyurethanzusammensetzungen üblicherweise eingesetzten Hilfs- und Zusatzstoffe enthalten, beispielsweise die Folgenden:
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate und Sebacate, organische Phosphor- und Sulfonsäureester oder Polybutene;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- Lösemittel;
- anorganische und organische Füllstoffe, insbesondere gemahlene oder gefällte Calciumcarbonate, welche gegebenenfalls mit Fettsäuren, insbesondere Stearaten, beschichtet sind, Baryt (BaSO₄, auch Schwerspat genannt), Quarzmehle, calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellte Russe (im Folgenden als "Russ" bezeichnet), PVC-Pulver oder Hohlkugeln;
- Fasern, beispielsweise aus Polyethylen;
- Pigmente, beispielsweise Titandioxid oder Eisenoxide;
- Katalysatoren, welche die Hydrolyse der Aldiminogruppen beschleunigen, insbesondere Säuren, insbesondere organische Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester;
- Katalysatoren, welche die Reaktion der Isocyanatgruppen beschleunigen, insbesondere Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismuttris-(neodecanoat), und tertiäre Aminogruppen enthaltende Verbindungen wie 2,2'-Dimorpholinodiethylether und 1,4-Diazabicyclo[2.2.2]octan;
- Rheologie-Modifizierer, insbesondere Verdickungsmittel oder Thixotropiermittel, zum Beispiel Harnstoffverbindungen, Polyamidwachse, Bentonite oder pyrogene Kieselsäuren;
- Trocknungsmittel, wie beispielsweise Molekularsiebe, Calciumoxid, hochreaktive Isocyanate wie p-Tosylisocyanat, monomere Diisocyanate, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane ("Silane") wie beispielsweise Epoxysilane, Vinylsilane, (Meth)acrylsilane, Isocyanatosilane, Carbamatosilane, Alkylsilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen, insbesondere Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, beim Einsatz der weiteren Bestandteile der Zusammensetzung darauf zu achten, dass diese die Lagerstabilität der Zusammensetzung nicht stark beeinträchtigen. Falls solche Substanzen zusammen mit freien Isocyanatgruppen gelagert werden sollen, beispielsweise im Fall einer hitzeaktivierbaren Zusammensetzung nach deren Aktivierung, bedeutet dies insbesondere, dass sie kein oder höchstens Spuren von Wasser enthalten sollten. Es kann sinnvoll sein, gewisse Bestandteile vor dem Einmischen in die Zusammensetzung chemisch oder physikalisch zu trocknen.

Bevorzugt enthält die härtbare Zusammensetzung mindestens einen Katalysator. Der Katalysator ist insbesondere eine Metallverbindung und/oder eine tertiäre Aminogruppen enthaltende Verbindung und/oder eine der genannten Säuren, wie Benzoesäure oder Salicylsäure.

Bevorzugt enthält die härtbare Zusammensetzung weiterhin mindestens einen Füllstoff.

Die härtbare Zusammensetzung liegt bevorzugt als einkomponentige Zusammensetzung vor.

Als "einkomponentig" wird im vorliegenden Dokument eine härtbare Zusammensetzung bezeichnet, bei welcher alle Bestandteile der Zusammensetzung vermischt im gleichen Gebinde gelagert werden, und welche bei Raumtemperatur über einen Zeitraum von mehreren Wochen bis Monaten lagerstabil ist, sich also in ihren Anwendungs- oder Gebrauchseigenschaften durch die Lagerung nicht oder nur unwesentlich verändert.

Zur Aushärtung der härtbaren Zusammensetzung wird das oberflächendesaktivierte Polyisocyanat **DI** durch Erwärmung aktiviert. Dazu wird die Zusammensetzung auf eine Temperatur im Bereich von 60 °C bis 160 °C, bevorzugt von 80 °C bis 140 °C, besonders bevorzugt von 90 °C bis 130 °C aufgewärmt. Dabei wird die Schutzschicht des oberflächendesaktivierten Polyisocyanats **DI** soweit beschädigt, dass dessen Isocyanatgruppen aktiviert und somit für in der Zusammensetzung vorhandene hydrolysierte bzw. hydrolysierende blockierten Aminogruppen zugänglich werden. Eine Öffnung des Uretdion-Rings von 2,4-TDI-Uretdion unter Freisetzung von weiteren Isocyanatgruppen wurde bis zu einer Temperatur von 130 °C nicht beobachtet.

Durch die Verwendung von oberflächendesaktiviertem Polyisocyanat **DI** lassen sich insbesondere Zusammensetzungen realisieren, welche ohne Hitzeeinwirkung keine freien Polyisocyanate aufweisen. Deshalb verfügen derartige Zusammensetzungen bei Raumtemperatur über eine äusserst gute Lagerstabilität. Die Lagerstabilität wird noch erhöht, wenn die Zusammensetzung abgesehen vor Hitze auch noch vor Feuchtigkeit geschützt wird.

Die härtbare Zusammensetzung kann insbesondere verwendet werden als heisshärtender Klebstoff, insbesondere als elastischer heisshärtender Klebstoff für Industrieanwendungen, beispielsweise für die Montage von Automobilen, Transportfahrzeugen und Schiffen, sowie als heisshärtendes Reaktionsharz in SMC (sheet moulding compounds). Dies wird im Folgenden noch weiter erörtert.

Die härtbare Zusammensetzung kann weiterhin verwendet werden als hitzeaktivierbarer Klebstoff, Dichtstoff oder Beschichtung, insbesondere als hitzeaktivierbarer elastischer Kleb- und Dichtstoff für Bau- und Industrieanwendungen, bevorzugt als Dichtstoff in Form von Bewegungsfugen für Bauwerke oder als Klebstoff für die Montage von Automobilen, Transportfahrzeugen oder Schiffen. Dies wird im Folgenden noch weiter erörtert.

In einer bevorzugten Ausführungsform stellt die härtbare Zusammensetzung eine heisshärtende Zusammensetzung dar.

In einer besonders bevorzugten Ausführungsform stellt sie eine heisshärtende Zusammensetzung **HH** dar, umfassend
a') mindestens ein blockiertes Amin **BA** in Form eines polymeren blockiertes Amins **PBA,** wie es vorgängig beschrieben wurde;
b) mindestens ein bei Raumtemperatur festes, oberflächendesaktiviertes Polyisocyanat **DI;** und
c) gegebenenfalls Wasser oder eine Wasser erzeugende Substanz.

Als polymeres blockiertes Amin **PBA** in der heisshärtenden Zusammensetzung **HH** bevorzugt sind die polymeren blockierten Amine **PBA1** und die polymeren blockierten Amine **PBA2.** Besonders bevorzugt sind die polymeren blockierten Amine **PBA2.** Am meisten bevorzugt sind die geruchsarmen oder geruchsfreien polymeren blockierten Amine **PBA2'.**

Die heisshärtende Zusammensetzung **HH** enthält vorteilhaft Wasser oder eine Wasser erzeugende Substanz. Vorteilhaft ist das Wasser oder die Wasser erzeugende Substanz dabei in einer solchen Menge vorhanden, dass das Verhältnis zwischen der Anzahl Wassermoleküle und der Anzahl der blockierten Aminogruppen mehr als 0.25, bevorzugt mindestens 0.5, beträgt.

Falls die in der heisshärtenden Zusammensetzung **HH** vorhandenen blockierten Aminogruppen in Form von Enaminogruppen und/oder zur Enamin-Bildung fähigen Ketimino- oder Aldiminogruppen vorliegen, so kann die Zusammensetzung auch ohne Wasser mittels Hitze aushärten, da Enaminogruppen ohne Hydrolyse direkt mit Isocyanatgruppen reagieren können. Dabei reagieren pro Enaminogruppe eine oder zwei Isocyanatgruppen ohne Abspaltung des entsprechenden Ketons oder Aldehyds. In diesem Fall kann die Zusammensetzung auch Wasser in einer solchen Menge enthalten, dass das Verhältnis zwischen der Anzahl Wassermoleküle und der Anzahl der blockierten Aminogruppen höchstens 0.25 beträgt. Die Aushärtung erfolgt aber schneller und bei tieferer Temperatur, wenn mehr Wasser vorhanden ist

Die heisshärtende Zusammensetzung **HH** enthält vorteilhaft mindestens einen Katalysator. Dafür geeignet sind die bereits erwähnten Katalysatoren, sowie weiterhin Verbindungen von Zink, Mangan, Eisen, Chrom, Cobalt, Kupfer, Nickel, Blei, Cadmium, Quecksilber, Antimon, Vanadium, Titan, Zirconium oder Kalium, wie Zink(II)-acetat, Zink(II)-2-ethylhexanoat, Zink(II)-laurat, Zink(II)-acetylacetonat, Eisen(III)-2-ethylhexanoat, Cobalt(II)-2-ethylhexanoat, Kupfer(II)-2-ethylhexanoat, Nickel(II)-naphthenat, Aluminiumlactat, Aluminiumoleat, Diisopropoxytitan-bis-(ethylacetoacetat), Kaliumacetat; tertiäre Amine wie N-Ethyl-diisopropylamin, N,N,N',N'-Tetramethylalkylendiamine, Pentamethyl-alkylentriamine und höhere Homologe davon, Bis-(N,N-diethylaminoethyl)-adipat, Tris-(3-dimethylaminopropyl)-amin, 1,4-Diazabicyclo[2.2.2]octan (DABCO), 1,8-Diazabicyclo[5.4.0]undec-7-en (DBU), 1,5-Diazabicyclo[4.3.0]non-5-en (DBN), N-Alkylmorpholine, N,N'-Dimethylpiperazin, stickstoffaromatische Verbindungen wie 4-Dimethylamino-pyridin, N-Methylimidazol, N-Vinylimidazol oder 1,2-Dimethylimidazol; organische Ammoniumverbindungen, insbesondere Tetraalkylammoniumcarboxylate, - halogenide und -hydroxyde, wie Tetrabutylammoniumbromid, Tetrabutylammoniumacetat und Benzyltrimethylammoniumhydroxid, oder alkoxylierte tertiäre Amine; sogenannte "delayed action"-Katalysatoren, welche Modifizierungen bekannter Metall- oder Aminkatalysatoren darstellen; sowie Kombinationen der genannten Verbindungen, insbesondere von Metallverbindungen und tertiären Aminen.

Die heisshärtende Zusammensetzung **HH** ist bei Raumtemperatur lagerstabil, d.h. sie kann in einer geeigneten Verpackung oder Anordnung, wie beispielsweise einem Fass, einem Eimer, einem Beutel, einer Kartusche oder einer Flasche über einen Zeitraum von mehreren Monaten aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Die heisshärtende Zusammensetzung **HH** härtet durch die Einwirkung von Hitze aus. Wie bereits erwähnt, wird dabei die Schutzschicht des oberflächendesaktivierten Polyisocyanats **DI** soweit beschädigt, dass dessen Isocyanatgruppen aktiviert und somit für in der Zusammensetzung vorhandene hydrolysierte bzw. hydrolysierende blockierten Aminogruppen zugänglich werden., womit die Aushärtung in Gang kommt. Die Beschädigung der Schutzschicht des oberflächendesaktivierten Polyisocyanates **DI** ist irreversibel; die Aktivierung der Isocyanatgruppen bleibt deshalb auch nach einem eventuellen Abkühlen der Zusammensetzung bestehen. Die Aushärtung erfolgt also auch dann, wenn die Zusammensetzung nur relativ kurz erwärmt wird. Das für die Hydrolyse der polymeren blockierten Amine **PBA** notwendige Wasser ist in der Zusammensetzung vorteilhaft entweder bereits vorhanden oder wird durch die Einwirkung von Hitze aus der Wasser erzeugenden Substanz erzeugt.

Bei der Reaktion der Isocyanatgruppen mit den hydrolysierenden blockierten Aminogruppen wird ein Keton oder ein Aldehyd freigesetzt. Die Reaktion der Isocyanatgruppen mit den hydrolysierenden blockierten Aminogruppen muss dabei nicht notwendigerweise über freie Aminogruppen erfolgen, sondern es sind auch Reaktionen mit Zwischenstufen der Hydrolyse möglich. So kann beispielsweise eine hydrolysierende Aldiminogruppe in Form einer Halbaminal-Gruppe mit einer Isocyanatgruppe reagieren. Im Verhältnis zu den in der heisshärtenden Zusammensetzung **HH** vorhandenen blockierten Aminogruppen überschüssige Isocyanatgruppen reagieren mit gegebenenfalls vorhandenen, gegenüber Isocyanatgruppen reaktiven Gruppen, sowie direkt mit vorhandener Feuchtigkeit. Als Resultat dieser Reaktionen härtet die Zusammensetzung zu einem festen Material aus. Dieser Vorgang wird auch als Vernetzung bezeichnet.

Die Aushärtung der heisshärtenden Zusammensetzung **HH** erfolgt im Temperaturbereich von 60 °C bis 160 °C, bevorzugt von 80 °C bis 140 °C, besonders bevorzugt von 90 °C bis 130 °C. Unter diesen Bedingungen ist die Aushärtung sehr rasch. Da die Aushärtung zum grösseren Teil über das polymere blockierte Amin **PBA** und nur zu einem kleinen Teil über die direkte Reaktion mit Feuchtigkeit erfolgt, härtet die Zusammensetzung weitgehend blasenfrei aus.

Die für Aushärtung einer heisshärtenden Zusammensetzung notwendige Wärme kann mit jeder beliebigen Energiequelle erzeugt werden. Geeignete Mittel zur Erwärmung sind insbesondere Umluftöfen, Heissluftgebläse oder Infrarotstrahler. Falls mindestens eines der Bauteile ferromagnetisch ist und/oder die Zusammensetzung ein piezoelektrisches, ferromagnetisches oder superparamagnetisches Material enthält, kann die Erwärmung auch durch Anlegen von magnetischen und/oder elektrischen Wechselfeldern, insbesondere Mikrowellen oder Induktion, erfolgen; dies erlaubt eine besonders rasche Erwärmung der heisshärtenden Zusammensetzung.

Aufgrund der Tatsache, dass das blockierte Amin **BA** in der heisshärtenden Zusammensetzung **HH** in Form eines polymeren blockierten Amins **PBA** vorliegt, sind nach der Aushärtung vorwiegend elastische Materialien mit einer hohen Dehnbarkeit und einer hohen Festigkeit erhältlich, wobei die mechanischen Eigenschaften unter anderem durch die Art des zur Herstellung des polymeren blockierten Amins **PBA1** oder **PBA2** verwendeten Polyurethanpolymers **PUP** beeinflusst werden.

Für den Fall, dass in der heisshärtenden Zusammensetzung **HH** als polymeres blockiertes Amin **PBA** ausschliesslich die geruchsarmen oder geruchsfreien polymeren blockierten Amine **PBA2'** und auch sonst keine flüchtigen Bestandteile vorhanden sind, entsteht bei deren Aushärtung nur ein geringer oder gar kein Geruch. Eine geruchsarme oder geruchsfreie Aushärtung ist für viele Anwendungen, insbesondere in Innenräumen, ein grosser Vorteil, wenn nicht sogar eine Voraussetzung.

Die heisshärtende Zusammensetzung **HH** ist vor allem geeignet als heisshärtender Klebstoff, insbesondere als heisshärtender elastischer Klebstoff für Industrieanwendungen, beispielsweise für die Montage von Automobilen, Transportfahrzeugen und Schiffen, sowie als heisshärtendes Reaktionsharz in SMC (sheet moulding compounds).

In einer weiteren Ausführungsform stellt die härtbare Zusammensetzung eine hitzeaktivierbare Zusammensetzung dar.

In einer bevorzugten Ausführungsform stellt sie eine hitzeaktivierbare Zusammensetzung **HA** dar, umfassend
a") mindestens ein blockiertes Amin **BA,** welches ausgewählt ist aus der Gruppe bestehend aus Oxazolidinen **BA1,** Aldiminen **BA2** der Formel (I), Oxazolidinogruppen aufweisenden polymeren blockierten Aminen **PBA1** und Aldiminogruppen der Formel (XII) aufweisenden polymeren blockierten Aminen **PBA2,** wie sie vorgängig beschrieben wurden;
b) mindestens ein bei Raumtemperatur festes, oberflächendesaktiviertes Polyisocyanat **DI;** und
d) gegebenenfalls mindestens ein Polyol **P.**
wobei die Zusammensetzung **HA** frei ist von Wasser oder Wasser oder eine Wasser erzeugende Substanz in einer solchen Menge enthält, dass das Verhältnis zwischen der Anzahl Wassermoleküle und der Anzahl der blockierten Aminogruppen höchstens 0.1 beträgt.

Die hitzeaktivierbare Zusammensetzung **HA** enthält vorteilhaft mindestens ein Polyol **P,** wenn als blockiertes Amin **BA** vorwiegend entweder ein Oxazolidin **BA1** oder ein Aldimin **BA2** der Formel (I) vorhanden ist.

Vorteilhaft enthält die hitzeaktivierbare Zusammensetzung **HA** also entweder
mindestens einem Oxazolidin **BA1** oder mindestens einem Aldimin **BA2** der Formel (I), jeweils in Kombination mit mindestens einem Polyol **P**;
oder
mindestens ein polymeres blockiertes Amin **PBA1** oder mindestens ein polymeres blockiertes Amin **PBA2.**

Mit einer solchen hitzeaktivierbaren Zusammensetzung **HA** entsteht bei der Aushärtung ein vorwiegend elastisches Material mit einer hohen Dehnbarkeit und einer hohen Festigkeit.

Als blockiertes Amin **BA** in der hitzeaktivierbaren Zusammensetzung **HA** bevorzugt sind Aldimine **BA2** der Formel (I) und polymere blockierte Amine **PBA2.** Besonders bevorzugt sind geruchsarme oder geruchsfreie Aldimine **BA2'** und geruchsarme oder geruchsfreie polymere blockierte Amine **PBA2'.**

Am meisten bevorzugt enthält die hitzeaktivierbare Zusammensetzung **HA** entweder mindestens ein geruchsarmes oder geruchsfreies Aldimin **BA2'** in Kombination mit mindestens einem Polyol **P,** oder mindestens ein geruchsarmes oder geruchsfreies polymeres blockiertes Amin **PBA2'.**

Das Polyol **P** ist bevorzugt ausgewählt aus der Gruppe bestehend aus Polyether-, Polyester-, Polycarbonat- und Polyacrylatpolyolen, bevorzugt Di- und Triolen.

Besonders bevorzugt als Polyol **P** sind Polyetherpolyole, insbesondere Polyoxypropylen- und Polyoxypropylenpolyoxyethylenpolyole, sowie flüssige Polyesterpolyole und Polyetherpolyesterpolyole.

Weiterhin besonders bevorzugt als Polyol **P** sind amorphe, teilkristalline und kristalline Polyester- und Polycarbonatdiole mit einem Schmelzpunkt im Bereich von 40 °C bis 80 °C, insbesondere 50 °C bis 70 °C, insbesondere Adipinsäure/Hexandiol-Polyester, Azelainsäure/Hexandiol-Polyester, Dodecandicarbonsäure/Hexandiol-Polyester und Polycarbonatdiole auf der Basis von Hexandiol.

Für den Fall, dass in der hitzeaktivierbaren Zusammensetzung **HA** kein polymeres blockiertes Amin **PBA** vorhanden ist, liegt das Polyol **P** vorteilhaft in einer solchen Menge vor, dass das Verhältnis zwischen Isocyanatgruppen und Hydroxylgruppen zwischen 1.3 und 2.5, bevorzugt zwischen 1.4 und 2.2, besonders bevorzugt zwischen 1.5 und 2.1, liegt.

Nach der Aktivierung des Polyisocyanats **DI** reagiert das Polyol **P** mit den Isocyanatgruppen, wobei ein Isocyanatgruppen aufweisendes Polyurethanpolymer gebildet wird. Für den Fall, dass weitere gegenüber Isocyanatgruppen reaktive Gruppen in der Zusammensetzung vorhanden sind, insbesondere im blockierten Amin **BA**, reagieren diese ebenfalls mit Isocyanatgruppen. Nach Ablauf dieser Reaktionen übrig bleibende Isocyanatgruppen sind zusammen mit den blockierten Aminogruppen lagerstabil, solange die Zusammensetzung nicht mit Feuchtigkeit in Kontakt kommt.

Eine hitzeaktivierbare Zusammensetzung ist vor ihrer Aktivierung bei Raumtemperatur äusserst lagerstabil, d.h. sie kann in einer geeigneten Verpackung oder Anordnung, wie beispielsweise einem Fass, einem Eimer, einem Beutel, einer Kartusche oder einer Flasche über einen sehr langen Zeitraum, beispielsweise über mehrere Jahre, aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt. Die Zusammensetzung ist deshalb besonders lagerstabil, weil sie zum einen nur blockierte Aminogruppen aufweist, welche auch zusammen mit freien Isocyanatgruppen lagerstabil sind, und weil sie zum anderen anstelle von freiem Isocyanat ein oberflächendesaktiviertes Polyisocyanat **DI** enthält. Diese Kombination schliesst ungewollte Kettenverlängerungsreaktionen während der Lagerung bei Raumtemperatur weitestgehend aus.

Die Aktivierung einer hitzeaktivierbaren Zusammensetzung erfolgt im Temperaturbereich von 60 °C bis 160 °C, bevorzugt von 80 °C bis 140 °C, besonders bevorzugt von 90 °C bis 130 °C. Wie bereits erwähnt, wird dabei die Schutzschicht des oberflächendesaktivierten Polyisocyanats **DI** soweit beschädigt, dass dessen Isocyanatgruppen aktiviert und somit für in der Zusammensetzung vorhandene hydrolysierte bzw. hydrolysierende blockierten Aminogruppen zugänglich werden. Die Beschädigung der Schutzschicht des oberflächendesaktivierten Polyisocyanates **DI** ist irreversibel; die Aktivierung der Isocyanatgruppen bleibt deshalb auch nach einem eventuellen Abkühlen der Zusammensetzung bestehen. Nach erfolgter Aktivierung des oberflächendesaktivierten Polyisocyanates **DI** kommt die Aushärtung der hitzeaktivierbaren Zusammensetzung in Gang, sobald diese mit Feuchtigkeit in Kontakt kommt.

In einer bevorzugten Ausführungsform erfolgt die Aktivierung der hitzeaktivierbaren Zusammensetzung **HA** vor deren Applikation im verschlossenen feuchtigkeitsdichten Gebinde, beispielsweise in einer verschlossenen Kartusche. Die aktivierte Zusammensetzung **HA** ist im verschlossenen Gebinde weiterhin lagerstabil, da die vorhandenen Oxazolidino- und Aldiminogruppen, wie bereits erwähnt, zusammen mit freien Isocyanatgruppen unter Ausschluss von Feuchtigkeit lagerstabil sind. Die solchermassen aktivierte Zusammensetzung **HA** kann wie eine aus dem Stand der Technik wohlbekannte einkomponentige feuchtigkeitshärtende Zusammensetzung verwendet werden.

In einer weiteren Ausführungsform erfolgt die Aktivierung der Zusammensetzung bei deren Applikation. Dabei kann beispielsweise ein Vorratsbehälter wie insbesondere ein Fass oder ein Hobbock bei der Anwendung der Zusammensetzung beheizt werden, oder die Zusammensetzung kann beispielsweise durch einen beheizten Schlauch gefördert werden.

In einer weiteren Ausführungsform erfolgt die Aktivierung der Zusammensetzung erst nach deren Applikation. Eine solche Anwendung ist insbesondere dann sinnvoll, wenn die hitzeaktivierbare Zusammensetzung **HA** kein Polyol **P** enthält und wenn die Zusammensetzung vor der Aktivierung genügend Feuchtigkeit für die Hydrolyse der blockierten Aminogruppen aus der Umgebung aufnehmen konnte.

Die hitzeaktivierbare Zusammensetzung **HA** reagiert nach erfolgter Aktivierung bei Kontakt mit Feuchtigkeit - auch bei Raumtemperatur. Die in der Zusammensetzung vorhandenen, durch die Aktivierung nun zugänglich gewordenen Isocyanatgruppen reagieren mit den hydrolysierenden Oxazolidino- und Aldiminogruppen; dabei wird ein Keton oder insbesondere ein Aldehyd freigesetzt. Die Reaktion der Isocyanatgruppen mit den hydrolysierenden blockierten Aminogruppen muss dabei nicht notwendigerweise über freie Aminogruppen erfolgen, sondern es sind auch Reaktionen mit Zwischenstufen der Hydrolyse möglich. So kann beispielsweise eine hydrolysierende Aldiminogruppe in Form einer Halbaminal-Gruppe mit einer Isocyanatgruppe reagieren. Im Verhältnis zu den in der Zusammensetzung vorhandenen blockierten Aminogruppen überschüssige Isocyanatgruppen reagieren direkt mit Feuchtigkeit. Als Resultat dieser Reaktionen härtet die Zusammensetzung zu einem festen Material aus. Dieser Vorgang wird auch als Vernetzung bezeichnet.

Enthält die hitzeaktivierbare Zusammensetzung **HA** eine Kombination aus mindestens einem Oxazolidin **BA1** oder mindestens einem Aldimin **BA2** und mindestens einem Polyol **P**, so wird die Zusammensetzung vorteilhaft mittels Hitze aktiviert, bevor sie mit Feuchtigkeit aus der Luft in Kontakt kommt. Auf diese Weise reagieren die aktivierten Isocyanatgruppen des oberflächendesaktivierten Polyisocyanates **DI** zuerst mit den Hydroxylgruppen des Polyols **P**, wobei ein Isocyanatgruppen aufweisendes Polyurethanpolymer gebildet wird, welches schliesslich bei Kontakt mit Feuchtigkeit weiterreagiert, insbesondere mit den hydrolysierenden blockierten Aminogruppen des Oxazolidins **BA1** oder des Aldimins **BA2.**

Die für die Aushärtung benötigte Feuchtigkeit kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, insbesondere in Form einer wasserhaltigen Paste, die, beispielsweise über einen Statikmischer, eingemischt wird.

Bevorzugt wird die Zusammensetzung mittels Luftfeuchtigkeit ausgehärtet.

Die hitzeaktivierte Zusammensetzung **HA** härtet im Allgemeinen ohne die Bildung von Blasen aus. Die Aushärtungsgeschwindigkeit lässt sich über die Art und Menge eines oder mehrerer gegebenenfalls vorhandener Katalysatoren, über die bei der Aushärtung herrschende Temperatur sowie über die Luftfeuchtigkeit bzw. die Menge zugesetzten Wassers beeinflussen.

Die hitzeaktivierbare Zusammensetzung **HA** weist eine Reihe von Vorteilen auf.

Sie ist bei Raumtemperatur praktisch unbeschränkt lagerfähig. Vor der Anwendung kann sie durch einen Wärmestoss aktiviert werden und weist dann die Applikations- und Aushärtecharakteristik sowie die Endfestigkeit einer einkomponentigen feuchtigkeitshärtenden Polyurethanzusammensetzung auf, wie sie aus dem Stand der Technik bekannt ist. Dieser Wärmestoss kann insbesondere auf die unter Ausschluss von Feuchtigkeit verpackte Zusammensetzung erfolgen. Es können also beispielsweise die verschlossenen Kartuschen, Hobbocke oder Fässer, in denen die Zusammensetzung aufbewahrt wurde, auf die zur Aktivierung der oberflächendesaktivierten Polyisocyanate **DI** erforderliche Temperatur erwärmt und anschliessend wieder abgekühlt werden. Die vorgängig erhitzte Zusammensetzung **HA** weist im weiterhin verschlossenen Gebinde eine Lagerstabilität von einigen Tagen bis mehreren Wochen auf und lässt sich, wie bereits erwähnt, wie eine aus dem Stand der Technik bekannte einkomponentige feuchtigkeitshärtende Polyurethanzusammensetzung verwenden.

Werden ausschliesslich die geruchsarmen oder geruchsfreien polymeren blockierten Amine **PBA2'** oder die geruchsarmen oder geruchsfreien Aldimine **BA2'** als blockierte Amine **BA** verwendet, so entsteht bei der Aushärtung der hitzeaktivierbaren Zusammensetzung **HA** nur ein geringer oder gar kein Geruch. Eine geruchsarme oder geruchsfreie Aushärtung ist für viele Anwendungen, insbesondere in Innenräumen, ein grosser Vorteil, wenn nicht sogar eine Voraussetzung.

Die hitzeaktivierbare Zusammensetzung **HA** ist geeignet als hitzeaktivierbarer Klebstoff, Dichtstoff und Beschichtung, insbesondere als elastischer Kleb- und Dichtstoff für Bau- und Industrieanwendungen, bevorzugt als Dichtstoff in Form von Bewegungsfugen für Bauwerke oder als Klebstoff für die Montage von Automobilen, Transportfahrzeugen oder Schiffen.

Insbesondere geeignet ist sie für Anwendungen, bei welchen mit einer sehr langen Lagerdauer zu rechnen ist. Dies ist beispielsweise dann der Fall, wenn die Zusammensetzung über einen langen Transportweg verschickt und/oder über den Detailhandel vertrieben wird; weiterhin dann, wenn ein Produkt nur in kleiner Menge verkauft, aus Gründen der Wirtschaftlichkeit aber in grösserer Menge hergestellt und vorrätig gehalten wird. Bei solchen Anwendungen kann das verpackte Material mittels Hitze aktiviert werden, kurz bevor es an einen Kunden weitergegeben wird, worauf der Kunde trotz längerer Vorlagerung des Produktes ein Material mit einer üblichen Lagerfähigkeit erhält.

Weiterhin geeignet ist die hitzeaktivierbare Zusammensetzung **HA** für Anwendungen, bei welchen eine einkomponentige feuchtigkeitshärtende Zusammensetzung einen Inhaltsstoff enthalten soll, welcher zusammen mit Isocyanatgruppen nur sehr eingeschränkt lagerfähig ist. Ein solcher Inhaltsstoff kann beispielsweise ein spezieller Katalysator sein, ein spezielles Flammschutzmittel oder sonst eine Substanz, welche der Zusammensetzung eine gewünschte Eigenschaft verleiht. Durch die Anwesenheit einer solchen Substanz in einer hitzeaktivierbaren Zusammensetzung **HA** mit dem oberflächendesaktivierten Polyisocyanat **DI** ist diese Zusammensetzung über einen langen Zeitraum lagerfähig. Beim Kunden kann sie dann vor der Verwendung aktiviert werden und weist dann noch eine eingeschränkte Lagerfähigkeit auf,beispielsweise einige Stunden bis Wochen, abhängig von der Art der verwendeten Substanz.

Ein weiterer Aspekt der vorliegenden Erfindung betrifft ein erstes Verfahren zum Verkleben von einem Substrat **S1** mit einem Substrat **S2,** welches die Schritte umfasst:
i) Applikation einer heisshärtenden Zusammensetzung auf ein Substrat **S1;**
ii) Kontaktieren der applizierten Zusammensetzung mit einem Substrat **S2;**
   oder
   i') Applikation einer heisshärtenden Zusammensetzung je auf ein Substrat **S1** und auf ein Substrat **S2;**
   ii') Kontaktieren der applizierten Zusammensetzung miteinander;
      und anschliessend
iii) Erwärmen der applizierten Zusammensetzung mit einer geeigneten Methode auf eine Temperatur von 60 °C bis 160 °C, bevorzugt von 80 °C bis 140 °C, besonders bevorzugt von 90 °C bis 130 °C;
wobei das Substrat **S2** aus dem gleichen oder einem unterschiedlichen Material wie das Substrat **S1** besteht.

Durch das Erwärmen in Schritt iii) härtet die Zusammensetzung aus.

Die Applikation der heisshärtenden Zusammensetzung erfolgt vorzugsweise bei Raumtemperatur oder bei einer nur leicht höheren Temperatur, insbesondere unterhalb einer Temperatur von 50 °C.

Ein weiterer Aspekt der vorliegenden Erfindung betrifft ein weiteres Verfahren zum Verkleben von einem Substrat **S1** mit einem Substrat **S2**, welches die Schritte umfasst:
α) Erwärmen einer hitzeaktivierbaren Zusammensetzung mit einer geeigneten Methode auf eine Temperatur von 60 °C bis 160 °C, bevorzugt von 80 °C bis 140 °C, besonders bevorzugt von 90 °C bis 130 °C; anschliessend
   entweder
β) Applikation der in Schritt α) erhitzten Zusammensetzung auf ein Substrat **S1;**
γ) Kontaktieren der applizierten Zusammensetzung mit einem Substrat **S2** innerhalb der Offenzeit der Zusammensetzung;
   oder
β') Applikation der in Schritt α) erhitzten Zusammensetzung auf ein Substrat **S1** und auf ein Substrat **S2;**
γ') Kontaktieren der applizierten Zusammensetzung miteinander innerhalb der Offenzeit der Zusammensetzung;
wobei zwischen dem Erwärmen und der Applikation der hitzeaktivierbaren Zusammensetzung ein Zeitraum von wenigen Minuten bis zu einigen Tagen oder mehreren Wochen liegen kann;
und wobei das Substrat **S2** aus dem gleichen oder einem unterschiedlichen Material wie das Substrat **S1** besteht.

Als "Offenzeit" wird in diesem Dokument die Zeit bezeichnet, während der die vorgängig erhitzte Zusammensetzung **HA** verarbeitet werden kann, nachdem die Zusammensetzung mit Feuchtigkeit in Kontakt gekommen ist.

Ein weiterer Aspekt der vorliegenden Erfindung betrifft ein Verfahren zum Abdichten. Dieses umfasst die Schritte:
α) Erwärmen einer hitzeaktivierbaren Zusammensetzung mit einer geeigneten Methode auf eine Temperatur von 60 °C bis 160 °C, bevorzugt von 80 °C bis 140 °C, besonders bevorzugt von 90 °C bis 130 °C;
β") Applikation der vorgängig erhitzten Zusammensetzung zwischen ein Substrat **S1** und ein Substrat **S2**, so dass die Zusammensetzung mit dem Substrat **S1** und dem Substrat **S2** in Kontakt steht;
wobei zwischen der Erwärmung und der Applikation der hitzeaktivierbaren Zusammensetzung ein Zeitraum von wenigen Minuten bis zu einigen Tagen oder mehreren Wochen liegen kann;
und wobei das Substrat **S2** aus dem gleichen oder einem unterschiedlichen Material wie das Substrat **S1** besteht.

Üblicherweise wird der Dichtstoff in eine sogenannte Fuge eingepresst.

Ein weiterer Aspekt der vorliegenden Erfindung betrifft ein Verfahren zum Beschichten eines Substrates **S1.** Dieses umfasst die Schritte:
α) Erwärmen einer hitzeaktivierbaren Zusammensetzung mit einer geeigneten Methode auf eine Temperatur von 60 °C bis 160 °C, bevorzugt von 80 °C bis 140 °C, besonders bevorzugt von 90 °C bis 130 °C;
β'") Applikation der vorgängig erhitzten Zusammensetzung auf ein Substrat **S1** innerhalb der Offenzeit der Zusammensetzung;
wobei zwischen der Erwärmung und der Applikation der hitzeaktivierbaren Zusammensetzung ein Zeitraum von wenigen Minuten bis zu einigen Tagen oder mehreren Wochen liegen kann.

Die Applikation der vorgängig erhitzten Zusammensetzung kann bei Raumtemperatur, aber auch bei einer höheren oder tieferen Temperatur erfolgen.

In diesen beschriebenen Verfahren sind geeignete Substrate **S1** und/oder **S2** insbesondere
- Glas, Glaskeramik, Beton, Mörtel, Backstein, Ziegel, Gips und Natursteine wie Granit oder Marmor;
- Metalle oder Legierungen wie Aluminium, Stahl, Eisen, Buntmetalle, verzinkte Metalle;
- Leder, Textilien, Papier, Holz, mit Harz gebundene Holzwerkstoffe, Harz-Textil-Verbundwerkstoffe und weitere sogenannte Polymer-Composites,
- Kunststoffe wie Polyvinylchlorid (Hart- und Weich-PVC), AcrylonitrilButadien-Styrol-Copolymere (ABS), SMC (Sheet Moulding Compounds), Polycarbonat (PC), Polyamid (PA), Polyester, Poly(methylmethacrylat) (PMMA), Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- beschichtete Substrate wie pulverbeschichtete Metalle oder Legierungen; sowie Farben und Lacke.

Die Substrate können bei Bedarf vor dem Applizieren der Zusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Aus diesen beschriebenen Verfahren zum Verkleben, Abdichten bzw. Beschichten - beziehungsweise aus der Verwendung einer der beschriebenen Zusammensetzungen als Klebstoff, Dichtstoff oder Beschichtung - entsteht ein Artikel.

Dieser Artikel ist insbesondere ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels, oder ein Artikel der Möbel-, Textil- oder Verpackungsindustrie.

Falls die härtbare Zusammensetzung als Klebstoff für elastische Verklebungen im Fahrzeugbau verwendet wird, weist sie bevorzugt eine pastöse Konsistenz mit strukturviskosen Eigenschaften auf. Ein solcher Klebstoff wird mittels einer geeigneten Vorrichtung auf das Substrat aufgetragen, bevorzugt in Form einer Raupe, wobei diese eine im Wesentlichen runde oder dreieckige Querschnittsfläche aufweisen kann. Geeignete Methoden zum Auftragen des Klebstoffes sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Ein Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Elastische Verklebungen im Fahrzeugbau sind beispielsweise das Ankleben von Teilen, wie Kunststoffabdeckungen, Zierleisten, Flansche, Stosstangen, Führerkabinen oder andere Anbauteile, an die lackierte Karosserie eines Transportmittels, oder das Einkleben von Scheiben in die Karosserie. Als Fahrzeuge genannt werden sollen beispielsweise Automobile, Lastkraftwagen, Busse, Schienenfahrzeuge und Schiffe.

### Beispiele

Als "Normklima" wird eine Temperatur von 23±1 °C und eine relative Luftfeuchtigkeit von 50±5% bezeichnet.
verwendete Rohstoffe:

| | |
|---|---|
| Acclaim^{®} 4200 N | Polyoxypropylen-Diol, OH-Zahl 28.5 mg KOH/g; Bayer |
| Caradol^{®} MD34-02 | Polyoxypropylenpolyoxyethylen-Triol, OH-Zahl 35 mg KOH/g; Shell |
| Desmophen^{®} 4011 T | Polyoxypropylen-Triol, OH-Zahl 550 mg KOH/g; Bayer |
| Acclaim^{®} 12200 | Polyoxypropylen-Diol, OH-Zahl 12.0 mg KOH/g; Bayer |
| Jeffamine^{®} D-230 | Polyoxypropylen-Diamin, mittleres Molekulargewicht ca. 240 g/mol, Amingehalt 8.29 mmol N/g; Huntsman |
| Jeffamine^{®} D-400 | Polyoxypropylen-Diamin, mittleres Molekulargewicht ca. 450 g/mol, Amingehalt 4.42 mmol N/g; Huntsman |
| Jeffamine^{®} T-5000 | Polyoxypropylen-Triamin, mittleres Molekulargewicht ca. 5000 g/mol, Amingehalt 0.535 mmol N/g; Huntsman |
| Desmodur^{®} 44 MC L | 4,4'-Methylendiphenyldiisocyanat; Bayer |
| Palatinol^{®} Z | Diisodecylphthalat (DIDP); BASF |

### 1. Beschreibung der Messmethoden

Der **Amingehalt,** das heisst der totale Gehalt an blockierten (Aldiminogruppen) und freien Aminogruppen in den hergestellten Verbindungen, wurde titrimetrisch bestimmt (mit 0.1N HClO₄ in Eisessig, gegen Kristallviolett) und ist stets angegeben in mmol N/g.

### 2. Herstellung von blockierten Aminen

### Aldimin A-1

In einem Rundkolben wurden unter Stickstoffatmosphäre 280 g 2,2-Dimethyl-3-lauroyloxy-propanal vorgelegt. Unter kräftigem Rühren wurden aus einem Eintropftrichter 100 g 2-(2-Aminoethoxy)-ethanol (DGA; Diglycolamine^{®} Agent, Huntsman; Amingehalt 9.46 mmol N/g) zugegeben. Danach wurden die flüchtigen Bestandteile im Vakuum entfernt (10 mbar, 80 °C). Ausbeute: 360 g farblose, bei Raumtemperatur dünnflüssige, klare und geruchlose Flüssigkeit mit einem Amingehalt von 2.58 mmol N/g.

### Aldimin A-2

In einem Rundkolben wurden unter Stickstoffatmosphäre 743 g destilliertes 2,2-Dimethyl-3-lauroyloxy-propanal vorgelegt. Unter kräftigem Rühren wurden aus einem Eintropftrichter 300 g Jeffamine^{®} D-230 langsam zugegeben. Danach wurden die flüchtigen Bestandteile im Vakuum entfernt (10 mbar, 80 °C). Ausbeute: 995 g klare, blassgelbe Flüssigkeit mit einem Amingehalt von 2.50 mmol N/g.

### Aldimin A-3

In einem Rundkolben wurden unter Stickstoffatmosphäre 550 g destilliertes 2,2-Dimethyl-3-lauroyloxy-propanal vorgelegt. Unter kräftigem Rühren wurden aus einem Eintropftrichter 156 g 1-Amino-3-aminomethyl-3,5,5-trimethylcyclohexan (= Isophorondiamin, IPDA; Vestamin^{®} IPD, Degussa; Amingehalt 11.68 mmol N/g) langsam zugegeben. Danach wurden die flüchtigen Bestandteile im Vakuum entfernt (10 mbar, 80 °C). Ausbeute: 671 g klare, farblose Flüssigkeit mit einem Amingehalt von 2.73 mmol N/g.

### Ketimin A-4

In einem Rundkolben mit Wasserabscheider und Rührer wurden 105 g 2-(2-Aminoethoxy)-ethanol (Diglycolamine^{®} Agent; Huntsman), 120 g 4-Methyl-2-pentanon und 100 ml Methylcyclohexan vorgelegt und die Mischung so lange unter Rückfluss erhitzt, bis sich die berechnete Menge Wasser abgeschieden hatte. Darauf wurde die flüchtigen Bestandteile der Reaktionsmischung im Vakuum grossenteils entfernt (10 mbar, 100 °C). Ausbeute: 193 g einer blassgelben, klaren Flüssigkeit mit einem Amingehalt von 5.17 mmol N/g.

### Oxazolidin A-5

In einem Rundkolben mit Wasserabscheider und Rührer wurden unter Stickstoffatmosphäre 20.00 g Diethanolamin, 15.10 g Isobutyraldehyd und 100 ml Cyclohexan vorgelegt und die Mischung so lange unter Rückfluss erhitzt, bis sich die berechnete Menge Wasser abgeschieden hatte. Darauf wurde die flüchtigen Bestandteile der Reaktionsmischung im Vakuum entfernt (10 mbar, 70 °C). Ausbeute: 30.8 g einer farblosen, klaren Flüssigkeit mit einem Amingehalt von 6.33 mmol N/g.

### 3. Herstellung von polymeren blockierten Aminen

### Polymer AP-1

400 g Acclaim^{®} 4200 N und 52 g Desmodur^{®} 44 MC L wurden nach bekanntem Verfahren bei 80 °C zu einem NCO-terminierten Polyurethanpolymeren mit einem Gehalt an freien Isocyanat-Gruppen von 1.90 Gewichts-% umgesetzt. In dieses Polyurethanpolymer wurden 80 g Aldimin ***A-1*** eingerührt und die Mischung solange bei 60 °C gehalten, bis die NCO-Bande (bei ca. 2270 cm⁻¹) im FT-IR-Spektrum nicht mehr nachweisbar war (ca. 12 Stunden). Das entstandene Aldiminogruppen aufweisende Polymer wies eine Viskosität bei 20 °C von ca. 100 Pa.s auf.

### Polymer AP-2

130 g Acclaim^{®} 4200 N, 260 g Caradol^{®} MD34-02, 60 g Desmodur^{®} 44 MC L und 50 g Palatinol^{®} Z wurden nach bekanntem Verfahren bei 80 °C zu einem NCO-terminierten Polyurethanpolymer mit einem Gehalt an freien Isocyanat-Gruppen von 2.05 Gewichts-% umgesetzt. In dieses Polyurethanpolymer wurden 95 g Aldimin ***A-1*** eingerührt und die Mischung solange bei 60 °C gehalten, bis die NCO-Bande im FT-IR-Spektrum nicht mehr nachweisbar war (ca. 12 Stunden). Das entstandene Aldiminogruppen aufweisende Polymer wies eine Viskosität bei 20 °C von ca. 100 Pa.s auf.

### Polymer AP-3

100 g Acclaim^{®} 4200 N, 200 g Caradol^{®} MD34-02 und 30 g Toluylendiisocyanat (TDI; Desmodur^{®} T 80 P, Bayer) wurden nach bekanntem Verfahren bei 80 °C zu einem NCO-terminierten Polyurethanpolymeren mit einem Gehalt an freien Isocyanat-Gruppen von 2.04 Gewichts-% umgesetzt. In dieses Polyurethanpolymer wurden 62 g Aldimin ***A-1*** eingerührt und die Mischung solange bei 60 °C gehalten, bis die NCO-Bande im FT-IR-Spektrum nicht mehr nachweisbar war (ca. 24 Stunden). Das entstandene Aldiminogruppen aufweisende Polymer wies eine Viskosität bei 20 °C von ca. 60 Pa·s auf.

### Polymer AP-4

Das Polymer ***AP-4*** wurde auf dieselbe Weise wie das Polymer ***AP-1*** hergestellt, wobei anstelle von 80 g Aldimin ***A-1*** 40 g Ketimin ***A-4*** verwendet wurden. Das entstandene Ketimin-terminierte Polyurethanpolymer wies eine Viskosität bei 20 °C von ca. 350 Pa.s auf.

### Polymer AP-5

Das Polymer ***AP-5*** wurde auf dieselbe Weise wie das Polymer ***AP-1*** hergestellt, wobei anstelle von 80 g Aldimin ***A-1*** 32.5 g Oxazolidin ***A-5*** verwendet wurden. Das entstandene Oxazolidin-terminierte Polyurethanpolymer wies eine Viskosität bei 20 °C von ca. 250 Pa.s auf.

### 4. Herstellung des oberflächendesaktivierten Polyisocyanats

### Isocyanatpaste DI-1

In einem Dispergiergerät wurden 40 g feinteiliges dimeres 2,4-Toluylendiisocyanat (Addolink^{®} TT, RheinChemie; Teilchengrösse ca. 5-50 µm, NCO-Gehalt 24.0 %) in 55 g Palatinol^{®} Z dispergiert. Dazu wurden 5 g Jeffamine^{®} D-400 gegeben und die Mischung durch erneutes Dispergieren zu einer feinen Paste verarbeitet.

### 5. Herstellung von heisshärtenden Klebstoffen

### Beispiele 1 bis 8 und Vergleichsbeispiel 9

In einem Vakuummischer wurden die Bestandteile gemäss Tabelle 1 in den angegebenen Gewichtsteilen unter Feuchtigkeitsausschluss zu einer knollenfreien, homogenen Paste verarbeitet, diese unverzüglich in eine innenlackierte Aluminium-Kartusche abgefüllt und die Kartusche luftdicht verschlossen.

Die *Thixotropierpaste* wurde wie folgt hergestellt:

In einem Vakuummischer wurden 3000 g Palatinol^{®} Z und 480 g Desmodur^{®} 44 MC L vorgelegt und leicht aufgewärmt. Dann wurden unter starkem Rühren 270 g Monobutylamin langsam zugetropft. Die entstehende Paste wurde unter Vakuum und Kühlung eine Stunde weitergerührt.

Die *Wasserpaste* wurde wie folgt hergestellt:

40 g Acclaim^{®} 4200 N und 5.2 g Desmodur^{®} 44 MC L wurden nach bekanntem Verfahren bei 80 °C zu einem NCO-terminierten Polyurethanpolymer mit einem Gehalt an freien Isocyanat-Gruppen von 1.90 Gewichts-% umgesetzt. Nach Abkühlung wurden 10.76 g Aldimin ***A-2,*** 0.2 g Salicylsäure-Lösung (5 Gewichts-% in Dioctyladipat) und 56.0 g Polyethylenglykol-dibutylether (Polyglycol BB 300, Clariant; mittleres Molekulargewicht 300 g/mol) homogen vermischt und auf 60 °C erwärmt. Dazu wurden 47.38 g Wasser eingerührt und die Mischung bei 60 °C während 20 Minuten gerührt. Es wurde eine milchweisse, dünnflüssige Emulsion erhalten. Diese wurde in einem Vakuummischer mit 1.9 g techn. Natrium-dodecylbenzolsulfonat (Rhodacal^{®} DS-10, Rhodia), 1.9 g Natrium-tallat (Dresinate^{®} TX, Eastman), 0.9 g Triethylamin, 14.1 g Polyethylenglykol-dibutylether (Polyglycol BB 300, Clariant; mittleres Molekulargewicht 300), 9.4 g hydrophiler pyrogener Kieselsäure (Aerosil^{®} 200, Degussa) und 9.4 g hydrophober pyrogener Kieselsäure (Aerosil^{®} R972, Degussa) zu einer feincremigen Paste mit einem Wassergehalt von 23.9 Gewichts-% vermischt.

**Tabelle 1: Zusammensetzung der heisshärtenden Klebstoffe**

| Beispiel | **1** | **2** | **3** | **4** | **5** | **6** | **7** | **8** | **9 (Vgl.)** |
|---|---|---|---|---|---|---|---|---|---|
| Polymer ***AP-1*** | 50.0 | - | - | - | - | 50.0 | 50.0 | 40.0 | - |
| Polymer ***AP-2*** | - | 50.0 | - | - | - | - | - | - | - |
| Polymer ***AP-3*** | - | - | 50.0 | - | - | - | - | - | - |
| Polymer ***AP-4*** | - | - | - | 50.0 | - | - | - | - | - |
| Polymer ***AP-5*** | - | - | - | - | 50.0 | - | - | - | - |
| Jeffamine^{®} T-5000 | - | - | - | - | - | - | - | - | 30.0 |
| Caradol^{®} MD34-02 | - | - | - | - | - | - | | 20.0 | 20.0 |
| Isocyanatpaste ***DI-1*** | 10.0 | 10.8 | 10.8 | 10.8 | 15.0 | 10.0 | 10.0 | 14.5 | 14.9 |
| Palatinol^{®} Z | 12.9 | 12.1 | 12.1 | 12.1 | 10.9 | - | 12.9 | - | 12.0 |
| Kaolin | 23.0 | 23.0 | 23.0 | 23.0 | 20.0 | 15.9 | 13.0 | 23.0 | 23.0 |
| *Thixotropierpaste* | - | - | - | - | - | 20.0 | - | - | - |
| Russ | - | - | - | - | - | | 10.0 | - | - |
| *Wasserpaste* | 2.0 | 2.0 | 2.0 | 2.0 | 2.0 | 2.0 | 2.0 | 1.4 | - |
| Salicylsäure^{a} | 2.0 | 2.0 | 2.0 | 2.0 | 2.0 | 2.0 | 2.0 | 1.0 | - |
| Dibutylzinndilaurat^{a} | 0.1 | 0.1 | 0.1 | 0.1 | 0.1 | 0.1 | 0.1 | 0.1 | 0.1 |

| | | | | | | | | | |
|---|---|---|---|---|---|---|---|---|---|
| ^{a} 5 Gew.-% in Dioctyladipat. | | | | | | | | | |

Die so erhaltenen heisshärtenden Klebstoffe wurden wie im Folgenden beschrieben geprüft:

Zur Bestimmung der **Lagerstabilität** wurden die Klebstoffe in der geschlossenen Kartusche im Ofen bei 40 °C gelagert und die Zeit bis zur Erreichung der doppelten Viskosität gemessen.

Zur Beurteilung des Aushärtungsverhaltens wurde der Klebstoff mittels Wärmeflusskalorimetrie (differential scanning calorimetry, DSC) untersucht, wobei das Maximum des exothermen Peaks **("DSC-Maximum")** in der gemessenen Aufheizkurve (Temperaturbereich 25 bis 180 °C; Aufheizrate 10 °C/min) bestimmt wurde. Dazu wurde ein DSC 822^{e} von Mettler Toledo verwendet.

Zur Bestimmung der mechanischen Eigenschaften nach Aushärtung wurde der Klebstoff auf einer PTFE-beschichteten Folie in einer beheizbaren Presse zu einem Film von ca. 2 mm Dicke verpresst und dieser während 10 Minuten auf 90 °C erwärmt. Der dabei erhaltene ausgehärtete Film wurde entweder direkt ("ohne Nachhärtung") oder nach zusätzlichen 24 Stunden Lagerung im Normklima ("mit Nachhärtung") auf mechanische Eigenschaften geprüft, indem aus dem Film einige Hanteln mit einer Länge von 75 mm, bei einer Steglänge von 30 mm und einer Stegbreite von 4 mm, ausgestanzt und diese gemäss DIN EN 53504 bei einer Zuggeschwindigkeit von 200 mm/min auf **Zugfestigkeit** (Bruchkraft), **Bruchdehnung** und **E-Modul** (bei 0-50% Dehnung) geprüft wurden.

Qualitativ geprüft wurden weiterhin die **Blasenbildung** durch visuelle Beurteilung im ausgehärteten Klebstoff sowie der **Geruch** während und unmittelbar nach der Aushärtung.

Die Ergebnisse sind in Tabelle 2 dargestellt.

**Tabelle 2: Eigenschaften der heisshärtenden Klebstoffe.**

| Beispiel | **1** | **2** | **3** | **4** | **5** | **6** | **7** | **8** | **9 (Vgl.)** |
|---|---|---|---|---|---|---|---|---|---|
| Lagerstabilität | >28 d | >28 d | >28 d | >28 d | >28 d | >28 d | >28 d | >28 d | >28 d |
| DSC-Maximum | 82°C | 75°C | 79°C | 70°C, 117°C | 70°C, 117°C | 76°C | 77°C | 77°C | 92°C |
| Blasenbildung | keine | keine | keine | einige | keine | keine | keine | keine | keine |
| Geruch | kein | kein | kein | stark | stark | kein | kein | kein | kein |

| Mechanische Eigenschaften ohne Nachhärtung: | | | | | | | | | |
|---|---|---|---|---|---|---|---|---|---|
| Zugfestigkeit (MPa) | 5.6 | 5.0 | 4.9 | n.m. | 4.8 | 4.4 | 4.6 | 2.9 | 3.0 |
| Bruchdehnung(%) | 460 | 300 | 380 | n.m. | 250 | 590 | 440 | 450 | 290 |
| E-Modul (MPa) | 3.7 | 4.0 | 4.0 | n.m. | 2.1 | 3.7 | 3.0 | 2.3 | 3.1 |

| Mechanische Eigenschaften mit Nachhärtung: | | | | | | | | | |
|---|---|---|---|---|---|---|---|---|---|
| Zugfestigkeit (MPa) | 5.8 | 5.2 | 5.1 | n.m. | 5.0 | 4.5 | 4.7 | 3.0 | 3.0 |
| Bruchdehnung(%) | 480 | 320 | 390 | n.m. | 220 | 600 | 450 | 460 | 270 |
| E-Modul (MPa) | 3.8 | 4.2 | 4.1 | n.m. | 2.4 | 3.7 | 3.1 | 2.2 | 3.2 |

| | | | | | | | | | |
|---|---|---|---|---|---|---|---|---|---|
| n.m. = nicht messbar (Blasen) | | | | | | | | | |

Aus der Tabelle 2 ist ersichtlich, dass die heisshärtenden Klebstoffe der erfindungsgemässen Beispiele 1 bis 8 unter den verwendeten Bedingungen schnell und vollständig und bis auf einen ohne Blasenbildung aushärten. Im ausgehärteten Zustand weisen sie unterschiedliche mechanische Eigenschaften auf. Je nach Art des verwendeten blockierten Amins lassen sich hohe Festigkeiten und Dehnungen erreichen, insbesondere mit den Polymeren ***AP-1, AP-2*** und ***AP-3***. Die Klebstoffe der Beispiele 4 und 5 riechen während der Aushärtung stark nach 4-Methyl-2-pentanon bzw. Isobutyraldehyd. Im Klebstoff des Beispiels 4 haben sich bei der Aushärtung Blasen gebildet. Die Blasenbildung wurde vermutlich hervorgerufen durch das freigesetzte 4-Methyl-2-pentanon, welches beim Erwärmen verdampft. Der heisshärtende Klebstoff des Vergleichsbeispiels 9 enthält keine blockierten Aminogruppen, sondern enthält als gegenüber Isocyanatgruppen reaktive Komponente eine Kombination aus einem Polyoxypropylen-Triamin und einem Polyoxypropylenpolyoxyethylen-Triol, wie sie aus dem Stand der Technik bekannt ist. Er härtet zwar ebenfalls schnell und blasenfrei aus, weist aber eher schlechtere mechanische Eigenschaften auf.

Der heisshärtende Klebstoff des Beispiels 1 wurde weiterhin auf Festigkeitsaufbau in Abhängigkeit der Temperatur und der Erwärmungsdauer untersucht. Dazu wurde der Klebstoff, wie oben beschrieben, als Film bei unterschiedlichen Temperaturen während unterschiedlicher Dauer ("Aushärtungsbedingungen") erwärmt. Der dabei erhaltene ausgehärtete Film wurde sofort ohne Nachhärtung auf mechanische Eigenschaften und Blasenbildung geprüft wie oben beschrieben.

Die Ergebnisse sind in Tabelle 3 dargestellt.

**Tabelle 3: Festigkeitsaufbau des heisshärtenden Klebstoffs des Beispiels 1 in Abhängigkeit der Temperatur und der Erwärmungsdauer.**

| Aushärtungsbedingungen | **80 °C, 2 min** | **80 °C, 5 min** | **90 °C, 2 min** | **90 °C, 5 min** | **90 °C, 10 min** | **90 °C, 20 min** |
|---|---|---|---|---|---|---|
| Blasenbildung | keine | keine | keine | keine | keine | keine |
| Zugfestigkeit [MPa] | 1.6 | 3.9 | 4.9 | 5.0 | 5.0 | 5.7 |
| Bruchdehnung [%] | 60 | 220 | 300 | 350 | 360 | 490 |
| E-Modul [MPa] | n.b. | 3.5 | 3.6 | 3.6 | 3.5 | 3.6 |
| Aushärtungsbedingungen | **100 °C, 1 min** | **100 °C, 2 min** | **120 °C, 0.5 min** | **120 °C, 1 min** | **140 °C, 0.5 min** | **160 °C, 0.5 min** |
| Blasenbildung | keine | keine | keine | keine | gering | deutlich |
| Zugfestigkeit [MPa] | 5.0 | 5.1 | 4.8 | 4.2 | 4.3 | 3.4 |
| Bruchdehnung[%] | 320 | 320 | 260 | 250 | 250 | 240 |
| E-Modul [MPa] | 3.8 | 3.9 | 3.7 | 3.6 | 3.5 | 2.9 |

| | | | | | | |
|---|---|---|---|---|---|---|
| n.b. = nicht bestimmt | | | | | | |

Aus der Tabelle 3 ist ersichtlich, dass der heisshärtende Klebstoff des Beispiels 1 bei Temperaturen von 90 ° und 100 °C sehr schnell zu einem elastischen Material mit guten mechanischen Eigenschaften aushärtet. Bei 80 °C dauert die Aushärtung deutlich länger, während bei höheren Temperaturen etwas tiefere Werte für die mechanischen Eigenschaften erreicht werden, bis bei Temperaturen ab 140 °C eine leichte Blasenbildung beginnt.

Die heisshärtenden Klebstoffe der Beispiele 6 und 7 wurden weiterhin auf Haftung zu den Substraten KTL-Stahl (kathodentauchlackiertes Stahlblech) und Glas (Flachglas, Luftseite) geprüft, wobei das Glas mit Sika^{®} Aktivator (erhältlich bei Sika Schweiz AG) und einer Ablüftezeit von 10 Minuten vorbehandelt wurde. Der Klebstoff wurde jeweils als Dreiecksraupe von ca. 1 cm Durchmesser auf die Substrate appliziert, die Raupe mit einem LDPE-Streifen belegt und über diesen leicht angedrückt. Anschliessend wurde das mit Klebstoff belegte Substrat zur Aushärtung des Klebstoffs während 10 Minuten in einen auf 100 °C beheizten Umluftofen gelegt und dann während 7 Tagen im Normklima gelagert. Darauf wurde die Haftung mittels "Raupentest" getestet. Hierbei wird am Ende knapp über der Klebefläche eingeschnitten. Das eingeschnittene Ende der Raupe wird mit einer Rundzange festgehalten und von der Substrat-Oberfläche gezogen. Dies geschieht durch vorsichtiges Aufrollen der Raupe auf die Zangenspitze, sowie Plazieren eines Schnittes senkrecht zur Raupenziehrichtung bis auf die blanke Oberfläche. Die Raupenabziehgeschwindigkeit ist so zu wählen, dass ca. alle 3 Sekunden ein Schnitt gemacht werden muss (Schnittabstand ca. 2 bis 3 mm). Die Teststrecke muss mindestens 8 cm betragen.

Die Bewertung der Hafteigenschaften erfolgte anhand des nach dem Abziehen der Raupe auf der Oberfläche zurückbleibenden Klebstoffs (Kohäsionsbruch), und zwar durch Abschätzen der kohäsiven Anteils der Haftfläche. Dabei wird ein Bruchbild mit mehr als 95% Kohäsionsbruch als "sehr gut" bezeichnet.

Die Ergebnisse sind in Tabelle 4 dargestellt.

**Tabelle 4: Haftung der heisshärtenden Klebstoffe der Beispiele 6 und 7.**

| Substrat | **KTL-Stahl** | **Glas (mit Vorbehandlung)** |
|---|---|---|
| Beispiel 6 | sehr gut | sehr gut |
| Beispiel 7 | sehr gut | sehr gut |

### Beispiele 10 bis 16

In einem Vakuummischer wurden die Bestandteile gemäss Tabelle 5 in den angegebenen Gewichtsteilen unter Feuchtigkeitsausschluss zu einer knollenfreien, homogenen Paste verarbeitet, diese unverzüglich in eine innenlackierte Aluminium-Kartusche abgefüllt und die Kartusche luftdicht verschlossen. Die *Thixotropierpaste* wurde wie im Beispiel 1 beschrieben hergestellt.

**Tabelle 5: Zusammensetzung der Klebstoffe der Beispiele 10 bis 16.**

| Beispiel | **10** | **11** | **12** | **13** | **14** | **15** | **16** |
|---|---|---|---|---|---|---|---|
| Polymer ***AP-4*** | 50.0 | 50.0 | 50.0 | 50.0 | 50.0 | 50.0 | 50.0 |
| Isocyanatpaste ***DI-1*** | 10.0 | 15.0 | 20.0 | 10.0 | 20.0 | 10.0 | 10.0 |
| Palatinol^{®} Z | 14.0 | 9.0 | 4.0 | 14.0 | 4.0 | - | 14.0 |
| *Thixotropierpaste* | - | - | - | - | - | 20.0 | - |
| Kaolin | 25.0 | 25.0 | 25.0 | 25.0 | 25.0 | 19.0 | 15.0 |
| Russ | - | - | - | - | - | - | 10.0 |
| Salicylsäure^{a} | 1.0 | 1.0 | 1.0 | - | - | 1.0 | 1.0 |
| DABeO^{®} 33-LV^{b} | - | - | - | 1.0 | 1.0 | - | - |

| | | | | | | | |
|---|---|---|---|---|---|---|---|
| ^{a} 5 Gew.-% in Dioctyladipat. ^{b} von Air Products. | | | | | | | |

Die so erhaltenen Klebstoffe wurden wie für Beispiel 1 beschrieben geprüft, wobei der Klebstoff-Film zur Aushärtung in der Presse aber während 5 Minuten auf 120 °C erwärmt und die mechanischen Eigenschaften ohne Nachhärtung bestimmt wurden. Die Ergebnisse sind in Tabelle 6 dargestellt.

**Tabelle 6: Eigenschaften der Klebstoffe der Beispiele 10 bis 16.**

| Beispiel | **10** | **11** | **12** | **13** | **14** | **15** | **16** |
|---|---|---|---|---|---|---|---|
| Lagerstabilität | >28 d | >28 d | >28 d | >28 d | >28 d | >28 d | >28 d |
| DSC-Maximum | 121 °C | 115°C | 118°C | 113°C | 120°C | 124°C | 127°C |
| Blasenbildung | keine | keine | keine | keine | keine | keine | keine |
| Zugfestigkeit [MPa] | 5.6 | 6.4 | 8.0 | 3.1 | 6.1 | 4.9 | 6.5 |
| Bruchdehnung [%] | 270 | 240 | 270 | 270 | 150 | 320 | 310 |
| E-Modul [MPa] | 3.0 | 4.5 | 5.3 | 1.5 | 5.5 | 3.6 | 2.7 |

Aus der Tabelle 6 ist ersichtlich, dass die heisshärtenden Klebstoffe der Beispiele 10 bis 16 auch ohne zugesetztes Wasser aushärten. Vermutlich reagieren die Ketiminogruppen des Polymers ***AP-4*** beim Erwärmen ohne Hydrolyse in der Enamin-Form mit dem aktivierten Polyisocyanat **DI.** Ein Hinweis auf diese Art der Aushärtung ist auch die Tatsache, dass beispielswiese der Klebstoff des Beispiels 12 eine höhere Festigkeit als der Klebstoff des Beispiels 10 aufweist, obwohl er nur halb so viele Ketiminogruppen bezogen auf die Isocyanatgruppen des oberflächendesaktivierten Polyisocyanates **DI** als das Beispiel 10 aufweist. Die Enamin-Form der Ketiminogruppen hat offenbar zweimal mit jeweils einer aktivierten Isocyanatgruppe reagiert und damit eine stärkere Vernetzung bewirkt. Die Tatsache, dass bei der Aushärtung der Klebstoffe keine Blasen entstanden, zeigt, dass offenbar kaum 4-Methyl-2-pentanon abgespalten wurde, was ebenfalls für eine Reaktion über die Enamin-Form des Ketimins spricht. Weiterhin ist aus der Tabelle 6 ersichtlich, dass diese Klebstoffe sowohl mittels Säure als auch mittels tertiärem Amin als Katalysator aushärten, wobei die ausgehärteten Klebstoffe beim Einsatz von Säure als Katalysator höhere Festigkeiten aufwiesen.

### 6. Herstellung von hitzeaktivierbaren feuchtigkeitshärtenden Klebstoffen

### Beispiele 17 bis 22 und Vergleichsbeispiel 23

In einem Vakuummischer wurden die Bestandteile gemäss Tabelle 7 in den angegebenen Gewichtsteilen unter Feuchtigkeitsausschluss zu einer knollenfreien homogenen Paste verarbeitet (Maximaltemperatur während dem Mischen = 50 °C), diese unverzüglich in eine innenlackierte Aluminium-Kartusche abgefüllt und die Kartusche luftdicht verschlossen. Die *Thixotropierpaste* wurde wie im Beispiel 1 beschrieben hergestellt.

**Tabelle 7: Zusammensetzung der hitzeaktivierbaren Klebstoffe.**

| Beispiel | **17** | **18** | **19** | **20** | **21** | **22** | **23(Vgl.)** |
|---|---|---|---|---|---|---|---|
| Polymer ***AP-1*** | 50.0 | 40.0 | - | - | - | - | - |
| Aldimin ***A-3*** | - | - | 4.0 | 4.0 | 1.5 | 2.5 | - |
| Desmophen^{®} 4011 T | - | | - | - | - | 0.4 | - |
| Caradol^{®} MD34-02 | - | - | 24.0 | 18.0 | 5.0 | - | 18.0 |
| Acclaim^{®} 4200 | - | - | 12.0 | 9.0 | - | - | 9.0 |
| Acclaim^{®} 12200 | - | - | - | - | 20.0 | 40.0 | - |
| Isocyanatpaste ***DI-1*** | 10.0 | 8.0 | 20.0 | 15.0 | 7.0 | 12.5 | 15.0 |
| Palatinol^{®} Z | 12.9 | 19.9 | 12.9 | 9.9 | - | 5.4 | 14.8 |
| *Thixotropierpaste* | - | - | - | 12.0 | 26.3 | 12.0 | 14.0 |
| Kaolin | 25.0 | 20.0 | 25.0 | 25.0 | - | 25.0 | 27.0 |
| Russ | - | 10.0 | - | 5.0 | - | - | - |
| Kreide | - | - | - | - | 38.0 | - | - |
| Salicylsäure^{a} | 2.0 | 2.0 | 2.0 | 2.0 | 2.0 | 2.0 | 2.0 |
| Dibutylzinndilaurat^{a} | 0.1 | 0.1 | 0.1 | 0.1 | 0.2 | 0.2 | 0.2 |

| | | | | | | | |
|---|---|---|---|---|---|---|---|
| ^{a} 5 Gew.-% in Dioctyladipat. | | | | | | | |

Die so erhaltenen hitzeaktivierbaren feuchtigkeitshärtenden Klebstoffe wurden Folgendermassen geprüft.

Zur Charakterisierung der Aktivierungstemperatur wurde das DSC-**Maximum** wie in Beispiel 1 beschrieben bestimmt.

Zur Bestimmung der mechanischen Eigenschaften nach Aushärtung wurde der Klebstoff zuerst durch Erwärmung während 30 Minuten auf 110 °C in einem Kartuschenofen aktiviert. Darauf liess man den Klebstoff wieder auf Raumtemperatur abkühlen, applizierte ihn mittels Kartuschenpistole auf eine PTFE-beschichtete Folie und verpresste ihn zu einem Film von ca. 2 mm Dicke. Den Film liess man während 5 Tagen im Normklima aushärten und bestimmte dann **Zugfestigkeit, Bruchdehnung** und **E-Modul** wie bei Beispiel 1 beschrieben.

**Lagerstabilität, Blasenbildung** und **Geruch** wurden wie in Beispiel 1 beschrieben bestimmt.

Die Ergebnisse sind in Tabelle 8 dargestellt.

**Tabelle 8: Eigenschaften der hitzeaktivierbaren Klebstoffe.**

| Beispiel | **17** | **18** | **19** | **20** | **21** | **22** | **23 (Vgl.)** |
|---|---|---|---|---|---|---|---|
| Lagerstabilität | >28 d | >28 d | >28 d | >28 d | >28 d | >28 d | >28 d |
| DSC-Maximum | 74°C | 71 °C | 79°C | 85°C | 83°C | 76°C | 90°C |
| Blasenbildung | keine | keine | keine | keine | keine | keine | ja |
| Geruch | kein | kein | kein | kein | kein | kein | kein |
| Zugfestigkeit [MPa] | 6.3 | 3.7 | 4.4 | 3.7 | 1.9 | 2.5 | n.m. |
| Bruchdehnung [%] | 640 | 310 | 270 | 240 | 190 | 280 | n.m. |
| E-Modul [MPa] | 4.2 | 4.1 | 4.1 | 3.8 | 2.4 | 2.0 | n.m. |

| | | | | | | | |
|---|---|---|---|---|---|---|---|
| n.m. = nicht messbar (viele Blasen) | | | | | | | |

Aus der Tabelle 8 ist ersichtlich, dass die erfindungsgemässen Klebstoffe der Beispiele 17 bis 22 nach erfolgter Hitzeaktivierung und anschliessender Abkühlung im Normklima zu elastischen Filmen aushärteten. Das Vergleichsbeispiel 23 hingegen, welches kein blockiertes Amin enthielt, bildete bei der Aushärtung einen Film mit vielen Blasen.

Der Klebstoff des Beispiels 17 wurde in einer weiteren Versuchsreihe so ausgehärtet, dass die Hitzeaktivierung erst unmittelbar nach der Applikation des Klebstoffes aufgebracht wurde. Dabei wurde die Dauer der Hitzeeinwirkung variiert und der Festigkeitsaufbau in Abhängigkeit der Aktivierungsdauer untersucht. Der Klebstoff wurde jeweils auf einer PTFE-beschichteten Folie in einer beheizbaren Presse zu einem Film von ca. 2 mm Dicke verpresst und dieser unterschiedlich lange auf 100 °C erwärmt. Anschliessend wurde der so erhaltene Film während 5 Tagen im Normklima belassen und dann die mechanischen Eigenschaften wie bei Beispiel 1 beschrieben geprüft. Die Ergebnisse sind in Tabelle 9 dargestellt.

**Tabelle 9: Festigkeitsaufbau des Klebstoffs des Beispiels 17 in Abhängigkeit der Aktivierungsdauer.**

| Aktivierungsdauer | **0 min** | **1 min** | **5 min** | **10 min** | **20 min** |
|---|---|---|---|---|---|
| Blasenbildung | keine | keine | keine | keine | keine |
| Zugfestigkeit [MPa] | n.m. (keine Aushärtung) | 5.6 | 6.5 | 6.3 | 6.0 |
| Bruchdehnung [%] | | 460 | 660 | 640 | 590 |
| E-Modul [MPa] | | 4.1 | 4.2 | 4.2 | 4.2 |

| | | | | | |
|---|---|---|---|---|---|
| n.m. = nicht messbar | | | | | |

Aus der Tabelle 9 ist ersichtlich, dass der hitzeaktivierbare Klebstoff des Beispiels 17 ohne Hitzeaktivierung keine Aushärtung zeigt. Eine Aktivierung während einer Minute bei 100 °C reicht aber bereits aus, um das oberflächendesaktivierte Polyisocyanat soweit zu aktivieren, dass die mechanischen Eigenschaften nach vollständiger Aushärtung recht nahe bei den für das Beispiel 17 erreichbaren Werten liegen. Bereits nach einer Aktivierung während 5 Minuten bei 100 °C ist das oberflächendesaktivierte Polyisocyanat offensichtlich vollständig aktiviert,wie die mechanischen Werte nach vollständiger Aushärtung zeigen.

Der Klebstoff des Beispiels 17 wurde schliesslich ohne Aktivierung appliziert wie oben beschrieben. Man beliess den Klebstofffilm während zwei Tagen im Normklima und prüfte daraufhin mit Hilfe eines Spatels, ob sich die Konsistenz des Klebstoffs seit der Applikation merklich verändert hatte (direkter Vergleich mit frischem Material). Es war keine Veränderung feststellbar.

Daraufhin wurde der Klebstofffilm während 10 Minuten in einen auf 100 °C beheizten Umluftofen gelegt und nach dem Abkühlen auf Raumtemperatur ohne weitere Nachhärtung wie oben beschrieben auf mechanische Eigenschaften geprüft. Es wurden folgende Werte erhalten:

| | | | |
|---|---|---|---|
| Blasenbildung: | keine | Bruchdehnung | 540% |
| Zugfestigkeit: | 6.0 MPa | E-Modul: | 4.0 MPa |

Es zeigte sich, dass sich der hitzeaktivierbare feuchtigkeitshärtende Klebstoff des Beispiels 17 zwei Tage nach seiner Applikation wie ein heisshärtender Klebstoff verhält, indem er bereits nach kurzer Erwärmung vollständig aushärtete. Anscheinend reichte die Menge an Feuchtigkeit, welche vom Klebstoff während dessen zweitägiger Lagerung im Normklima aus der Luft durch Diffusion aufgenommen worden war, bereits aus, um den Klebstoff nach erfolgter Hitzeaktivierung weitgehend oder vollständig zu vernetzen.

## Patentansprüche

1. Härtbare Zusammensetzung umfassend
a) mindestens ein blockiertes Amin **BA,** welches eine blockierte, hydrolytisch aktivierbare Aminogruppe und entweder mindestens eine weitere blockierte, hydrolytisch aktivierbare Aminogruppe oder mindestens eine Reaktivgruppe **R,** welche ausgewählt ist aus der Gruppe bestehend aus Hydroxylgruppe, Mercaptogruppe und sekundäre Aminogruppe, aufweist;
b) mindestens ein bei Raumtemperatur festes, oberflächendesaktiviertes Polyisocyanat **DI;** und
c) gegebenenfalls Wasser oder eine Wasser erzeugende Substanz.

2. Härtbare Zusammensetzung gemäss Anspruch 1, **dadurch gekennzeichnet, dass** der mittlere Teilchendurchmesser des oberflächendesaktivierten Polyisocyanates **DI** im Bereich von 0.01 bis 100 µm, bevorzugt 0.1 bis 50 µm, besonders bevorzugt 0.3 bis 30 µm, liegt.

3. Härtbare Zusammensetzung gemäss Anspruch 1 oder 2, **dadurch gekennzeichnet, dass** das dem bei Raumtemperatur festen, oberflächendesaktivierten Polyisocyanat **DI** zugrunde liegende Polyisocyanat ausgewählt ist aus der Gruppe bestehend aus Naphthalin-1,5-diisocyanat (NDI), 3,3'-Dimethyl-4,4'-diisocyanatodiphenyl (TODI), 1,4-Phenylendiisocyanat, dem Isocyanurat von 1-Isocyanato-3,3,5-trimethyl-5-isocyanatomethyl-cyclohexan, dem Uretdion von 4,4'-Diphenylmethandiisocyanat, dem Uretdion von 2,4- Toluylendiisocyanat und dem Harnstoff von 2,4-Toluylendiisocyanat.

4. Härtbare Zusammensetzung gemäss einem der vorhergehenden Ansprüche, **dadurch gekennzeichnet, dass** das blockierte Amin **BA** und das oberflächendesaktivierte Polyisocyanat **DI** in der härtbaren Zusammensetzung in einer solchen Menge vorliegen, dass das Verhältnis zwischen den blockierten Aminogruppen und den Isocyanatgruppen 0.1 bis 1.1, bevorzugt 0.2 bis 1.1, besonders bevorzugt 0.3 bis 1.0, beträgt.

5. Härtbare Zusammensetzung gemäss einem der vorhergehenden Ansprüche, **dadurch gekennzeichnet, dass** das blockierte Amin **BA** ein Aldimin **BA2** der Formel (I) ist, 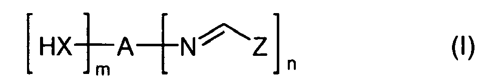 wobei
n für 1 oder 2 oder 3 oder 4 steht, und
m für 0 oder 1 steht,
mit der Massgabe, dass m+n für 2 oder 3 oder 4 steht; und wobei
A entweder für einen m+n-wertigen Kohlenwasserstoffrest mit 2 bis 30 C-Atomen, welcher gegebenenfalls mindestens ein Heteroatom, ins- besondere in der Form von Ether-Sauerstoff oder tertiärem Amin- Stickstoff, enthält, steht,
oder zusammen mit R⁷ für einen (n+2)-wertigen Kohlenwasserstoff- rest mit 3 bis 30 C-Atomen, welcher gegebenenfalls mindestens ein Heteroatom, insbesondere in der Form von Ether-Sauerstoff oder tertiärem Amin-Stickstoff, enthält, steht;
X für O oder S oder N-R⁶ oder N-R⁷ steht,
wobei R⁶
entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (II) steht, 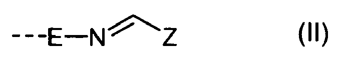 wobei
E für einen zweiwertigen, gegebenenfalls Ether-Sauerstoff oder tertiären Amin-Stickstoff aufweisenden, Kohlenwasserstoffrest mit 2 bis 12 C-Atomen steht, und
R⁷ zusammen mit A für einen (n+2)-wertigen Kohlenwasserstoffrest mit 3 bis 30 C-Atomen, welcher gegebenenfalls mindestens ein Heteroatom, insbesondere in Form von Ether-Sauerstoff oder tertiärem Amin-Stickstoff, enthält, steht; und
Z frei ist von Reaktivgruppen **R** und von primären Aminogruppen und
entweder für einen Rest Z¹ der Formel (III)steht 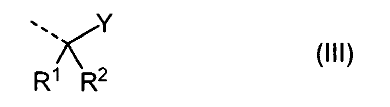 wobei
Y für einen einwertigen Kohlenwasserstoffrest mit 1 bis 32 C-Atomen steht, welcher gegebenenfalls mindestens ein Heteroatom, insbesondere Sauerstoff oder Stickstoff in der Form von Ether-, Carbonyl-, Ester-, Amido-, Harnstoff-, Urethan- oder tertiären Aminogruppen, aufweist, und
R¹ und R² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen,
oder für einen Rest Z² steht,
wobei Z² entweder für einen substituierten oder unsubstituierten Aryl- oder Heteroaryl-Rest, welcher eine Ringgrösse von 5 bis 8, bevorzugt 6, Atomen aufweist, steht,
oder 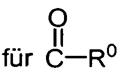 steht,
wobei R⁰ für ein Wasserstoffatom oder für einen Alkoxyrest oder für einen substituierten oder unsubstituierten Alkenyl- oder Arylalkenylrest mit mindestens 6 C-Atomen steht.

6. Härtbare Zusammensetzung gemäss Anspruch 5, **dadurch gekennzeichnet, dass** das Aldimin **BA2** der Formel (I) einen Rest Z¹ der Formel (III a') aufweist 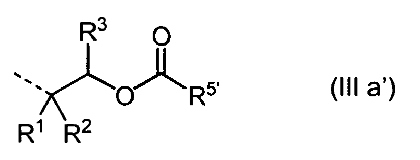 wobei
R³ für ein Wasserstoffatom oder für eine Alkylgruppe oder für eine Cycloalkylgruppe oder für eine Arylalkylgruppe mit 1 bis 12 C-Atomen steht; und
R^{5'} entweder
für einen linearen oder verzweigten Alkylrest mit 6 bis 30, insbesondere 11 bis 30, C-Atomen, gegebenenfalls mit cyclischen Anteilen und gegebenenfalls mit mindestens einem Heteroatom, insbesondere Sauerstoff in der Form von Ether-, Carbonyl- oder Ester-Gruppen, steht,
oder für einen einfach oder mehrfach ungesättigten, linearen oder verzweigten Kohlenwasserstoffrest mit 6 bis 30, insbesondere 11 bis 30, C-Atomen, steht.

7. Härtbare Zusammensetzung gemäss einem der Ansprüche 1 bis 4, **dadurch gekennzeichnet, dass** das blockierte Amin **BA** ein polymeres blockiertes Amin **PBA** ist, welches ein Polymer mit mindestens zwei blockierten, hydrolytisch aktivierbaren Aminogruppen darstellt.

8. Härtbare Zusammensetzung gemäss einem der Ansprüche 1 bis 4, **dadurch gekennzeichnet, dass** das blockierte Amin **BA** ein polymeres blockiertes Amin **PBA2'** ist, welches frei ist von Isocyanatgruppen, Reaktivgruppen **R** und primären Aminogruppen, und welches Aldiminogruppen der Formel (XII a) aufweist, 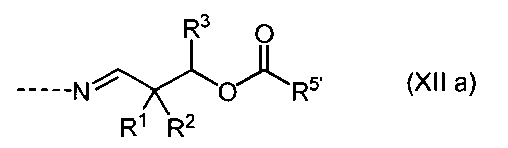 wobei
R¹ und R² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen;
R³ für ein Wasserstoffatom oder für eine Alkylgruppe oder für eine Cycloalkylgruppe oder für eine Arylalkylgruppe mit 1 bis 12 C-Atomen steht; und
R^{5'} entweder
für einen linearen oder verzweigten Alkylrest mit 6 bis 30, insbesondere 11 bis 30, C-Atomen, gegebenenfalls mit cyclischen Anteilen und gegebenenfalls mit mindestens einem Heteroatom, insbesondere Sauerstoff in der Form von Ether-, Carbonyl- oder Ester-Gruppen, steht,
oder für einen einfach oder mehrfach ungesättigten, linearen oder verzweigten Kohlenwasserstoffrest mit 6 bis 30, insbesondere 11 bis 30, C-Atomen, steht.

9. Härtbare Zusammensetzung gemäss einem der vorhergehenden Ansprüche, **dadurch gekennzeichnet, dass** die Zusammensetzung Wasser oder eine Wasser erzeugende Substanz in einer solchen Menge enthält, dass das Verhältnis zwischen der Anzahl Wassermoleküle und der Anzahl der blockierten Aminogruppen mehr als 0.25, bevorzugt mindestens 0.5, beträgt, und weiterhin **dadurch gekennzeichnet ist, dass** die Zusammensetzung heisshärtend ist.

10. Härtbare Zusammensetzung gemäss einem der Ansprüche 1 bis 4, **dadurch gekennzeichnet, dass** die in der Zusammensetzung vorhandenen blockierten Aminogruppen in Form von Enaminogruppen und/oder zur Enamin-Bildung fähige Ketimino- oder Aldiminogruppen vorliegen, und dass die Zusammensetzung frei ist von Wasser oder Wasser in einer solchen Menge enthält, das das Verhältnis zwischen der Anzahl Wassermoleküle und der Anzahl der blockierten Aminogruppen höchstens 0.25 beträgt, und weiterhin **dadurch gekennzeichnet ist, dass** die Zusammensetzung heisshärtend ist.

11. Härtbare Zusammensetzung gemäss einem der Ansprüche 1 bis 8, **dadurch gekennzeichnet, dass** die in der Zusammensetzung vorhandenen blockierten Aminogruppen in Form von Oxazolidinogruppen oder nicht zur Enamin-Bildung fähige Aldiminogruppen vorliegen,
und dass die Zusammensetzung frei ist von Wasser oder Wasser in einer solchen Menge enthält, dass das Verhältnis zwischen der Anzahl Wassermoleküle und der Anzahl der blockierten Aminogruppen höchstens 0.1 beträgt,
und weiterhin **dadurch gekennzeichnet, dass** die Zusammensetzung gegebenenfalls ein Polyol **P** enthält und dass die Zusammensetzung hitzeaktivierbar ist.

12. Verfahren zum Verkleben von einem Substrat **S1** mit einem Substrat **S2,** welches die Schritte umfasst:
i) Applikation einer härtbaren Zusammensetzung gemäss einem der Ansprüche 9 oder 10 auf ein Substrat **S1;**
ii) Kontaktieren der applizierten Zusammensetzung mit einem Substrat **S2;**
oder
i') Applikation einer härtbaren Zusammensetzung gemäss einem der Ansprüche 9 oder 10 je auf ein Substrat **S1** und auf ein Substrat **S2;**
ii') Kontaktieren der applizierten Zusammensetzung miteinander;
und anschliessend
iii) Erwärmen der applizierten Zusammensetzung mit einer geeigneten Methode auf eine Temperatur von 60 °C bis 160 °C, bevorzugt von 80 °C bis 140 °C, besonders bevorzugt von 90 °C bis 130 °C;
wobei das Substrat **S2** aus
dem gleichen oder einem unterschiedlichen Material wie das Substrat **S1**
besteht.

13. Verfahren zum Verkleben von einem Substrat **S1** mit einem Substrat **S2,** welches die Schritte umfasst:
α) Erwärmen einer härtbaren Zusammensetzung gemäss Anspruch 11 mit einer geeigneten Methode auf eine Temperatur von 60 °C bis 160 °C, bevorzugt von 80 °C bis 140 °C, besonders bevorzugt von 90 °C bis 130 °C; anschliessend
entweder
β) Applikation der in Schritt α) erhitzten Zusammensetzung auf ein Substrat **S1;**
γ) Kontaktieren der applizierten Zusammensetzung mit einem Substrat **S2** innerhalb der Offenzeit der Zusammensetzung;
oder
β') Applikation der Schritt α) erhitzten Zusammensetzung auf ein Substrat **S1** und auf ein Substrat **S2;**
γ') Kontaktieren der applizierten Zusammensetzung miteinander innerhalb der Offenzeit der Zusammensetzung;
wobei zwischen dem Erwärmen und der Applikation der Zusammensetzung ein Zeitraum von wenigen Minuten bis zu einigen Tagen oder mehreren Wochen liegen kann;
und wobei das Substrat **S2** aus dem gleichen oder einem unterschiedlichen Material wie das Substrat **S1** besteht.

14. Verwendung einer härtbaren Zusammensetzung gemäss einem der Ansprüche 9 oder 10 als heisshärtender Klebstoff, insbesondere als elastischer heisshärtender Klebstoff für Industrieanwendungen, beispielsweise für die Montage von Automobilen, Transportfahrzeugen und Schiffen, sowie als heisshärtendes Reaktionsharz in SMC (sheet moulding compounds).

15. Verwendung einer härtbaren Zusammensetzung gemäss Anspruch 11 als hitzeaktivierbarer Klebstoff, Dichtstoff oder Beschichtung, insbesondere als hitzeaktivierbarer elastischer Kleb- und Dichtstoff für Bau- und Industrieanwendungen, bevorzugt als Dichtstoff in Form von Bewegungsfugen für Bauwerke oder als Klebstoff für die Montage von Automobilen, Transportfahrzeugen oder Schiffen.

## Claims

1. Curable composition comprising
a) at least one blocked amine **BA** which has a blocked, hydrolytically activatable amino group and at least one further blocked, hydrolytically activatable amino group or at least one reactive group **R** selected from the group consisting of hydroxyl group, mercapto group and secondary amino group;
b) at least one room temperature solid surface-deactivated polyisocyanate **DI;** and
c) optionally water or a water-producing substance.

2. Curable composition according to Claim 1, **characterized in that** the mean particle diameter of the surface-deactivated polyisocyanate **DI** is in the range from 0.01 to 100 µm, preferably 0.1 to 50 µm, more preferably 0.3 to 30 µm.

3. Curable composition according to Claim 1 or 2, **characterized in that** the parent polyisocyanate of the room temperature solid surface-deactivated polyisocyanate **DI** is selected from the group consisting of naphthalene 1,5-diisocyanate (NDI), 3,3'-dimethyl-4,4'-diisocyanatodiphenyl (TODI), phenylene 1,4-diisocyanate, the isocyanurate of 1-isocyanato-3,3,5-trimethyl-5-isocyanatomethylcyclohexane, the uretdione of diphenylmethane 4,4' -diisocyanate, the uretdione of tolylene 2,4-diisocyanate and the urea of tolylene 2,4-diisocyanate.

4. Curable composition according to any of the preceding claims, **characterized in that** the blocked amine **BA** and the surface-deactivated polyisocyanate **DI** are present in the curable composition in such an amount that the ratio between the blocked amino groups and the isocyanate groups is 0.1 to 1.1, preferably 0.2 to 1.1, more preferably 0.3 to 1.0.

5. Curable composition according to any of the preceding claims, **characterized in that** the blocked amine **BA** is an aldimine **BA2** of the formula (I) 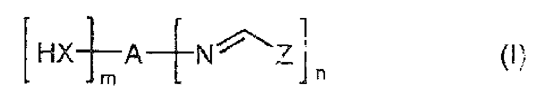 where
n is 1 or 2 or 3 or 4, and
m is 0 or 1,
with the proviso that m+n is 2 or 3 or 4; and wherein
A is either an m+n-valent hydrocarbyl radical which has 2 to 30 carbon atoms and optionally contains at least one heteroatom, especially in the form of ether oxygen or tertiary amine nitrogen,
or together with R⁷ is an (n+2)-valent hydrocarbyl radial which has 3 to 30 carbon atoms and optionally contains at least one heteroatom, especially in the form of ether oxygen or tertiary amine nitrogen;
X is O or S or N-R⁶ or N-R⁷**,**
where R⁶ is
either a monovalent hydrocarbyl radical which has 1 to 20 carbon atoms and optionally has at least one carboxylic ester, nitrile, nitro, phosphonic ester, sulphone or sulphonic ester group,
or a substituent of the formula (II) 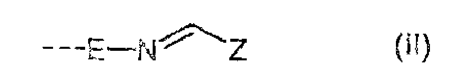 where
E is a divalent hydrocarbyl radical which has 2 to 12 carbon atoms and optionally has ether oxygen or tertiary amine nitrogen, and
R⁷ together with A is an (n+2)-valent hydrocarbyl radical which has 3 to 30 carbon atoms and optionally has at least one heteroatom, especially in the form of ether oxygen or tertiary amine nitrogen; and
Z is free of reactive R groups and of primary amino groups and is either a Z¹ radical of the formula (III) 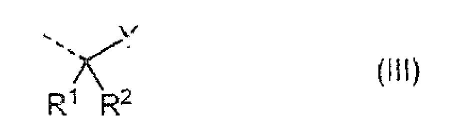 where
Y is a monovalent hydrocarbyl radical which has 1 to 32 carbon atoms and optionally has at least one heteroatom, especially oxygen or nitrogen in the form of ether, carbonyl, ester, amido, urea, urethane or tertiary amino groups, and
R¹ and R² are either each independently a monovalent hydrocarbyl radical having 1 to 12 carbon atoms,
or together are a divalent hydrocarbyl radical which has 4 to 12 carbon atoms and is part of an optionally substituted carbocyclic ring having 5 to 8, preferably 6, carbon atoms,
or is a Z² radical,
where Z² is either a substituted or unsubstituted aryl or heteroaryl radical which has a ring size of 5 to 8, preferably 6, atoms, 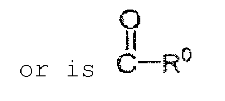 where R⁰ is a hydrogen atom or an alkoxy radical or a substituted or unsubstituted alkenyl or arylalkenyl radical having at least 6 carbon atoms.

6. Curable composition according to Claim 5, **characterized in that** the aldimine **BA2** of the formula (I) has a Z¹ radical of the formula (IIIa') 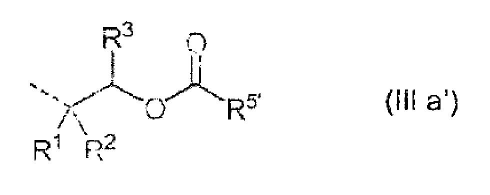 where
R² is a hydrogen atom or an alkyl group or a cycloalkyl group or an arylalkyl group having 1 to 12 carbon atoms;
and
R⁵' is either
a linear or branched alkyl radical having 6 to 30, especially 11 to 30, carbon atoms, optionally having cyclic components and optionally having at least one heteroatom,
especially oxygen in the form of ether, carbonyl or ester groups,
or a mono- or polyunsaturated, linear or branched hydrocarbyl radical having 6 to 30, especially 11 to 30, carbon atoms.

7. Curable composition according to any of Claims 1 to 4, **characterized in that** the blocked amine **BA** is a polymeric blocked amine **PBA,** the latter being a polymer with at least two blocked, hydrolytically activatable amino groups.

8. Curable composition according to any of Claims 1 to 4, **characterized in that** the blocked amine **BA** is a polymeric blocked amine **PBA2'** which is free of isocyanate groups, reactive groups **R** and primary amino groups, and which has aldimino groups of the formula (XIIa) 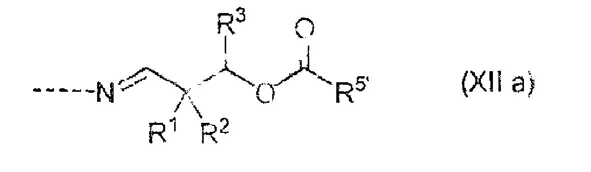 where
R¹ and R² are either
each independently a monovalent hydrocarbyl radical having 1 to 12 carbon atoms,
or together are a divalent hydrocarbyl radical which has 4 to 12 carbon atoms and is part of an optionally substituted carbocyclic ring having 5 to 8, preferably 6, carbon atoms;
R³ is a hydrogen atom or an alkyl group or a cycloalkyl group or an arylalkyl group having 1 to 12 carbon atoms; and
R^{5'} is either
a linear or branched alkyl radical having 6 to 30, especially 11 to 30, carbon atoms, optionally having cyclic components and optionally having at least one heteroatom, especially oxygen in the form of ether, carbonyl or ester groups,
or a mono- or polyunsaturated, linear or branched hydrocarbyl radical having 6 to 30, especially 11 to 30, carbon atoms.

9. Curable composition according to any of the preceding claims, **characterized in that** the composition comprises water or a water-producing substance in such an amount that the ratio between the number of water molecules and the number of blocked amino groups is more than 0.25, preferably at least 0.5, and further **characterized in that** the composition is heat-curing.

10. Curable composition according to any of Claims 1 to 4, **characterized in that** the blocked amino groups present in the composition are in the form of enamino groups and/or ketimino or aldimino groups capable of enamine formation, and **in that** the composition is free of water or contains water in such an amount that the ratio between the number of water molecules and the number of blocked amino groups is at most 0.25, and further **characterized in that** the composition is heat-curing.

11. Curable composition according to any of Claims 1 to 8, **characterized in that** the blocked amino groups present in the composition are in the form of oxazolidino groups or aldimino groups incapable of enamine formation,
and **in that** the composition is free of water or contains water in such an amount that the ratio between the number of water molecules and the number of blocked amino groups is at most 0.1,
and further **characterized in that** the composition optionally comprises a polyol P and that the composition is heat-activatable.

12. Process for bonding a substrate **S1** to a substrate **S2,** which comprises the following steps:
i) applying a curable composition according to either of Claims 9 and 10 to a substrate **S1;**
ii) contacting the composition applied with a substrate **S2;**
or
i') applying a curable composition according to either of Claims 9 and 10 to a substrate **S1** and to a substrate **S2;**
ii' ) contacting the compositions applied with one another;
and then
iii) heating the composition applied by a suitable method to a temperature of 60°C to 160°C, preferably of 80°C to 140°C, more preferably of 90°C to 130°C;
said substrate **S2** consisting of the same material as the substrate **S1** or a different material.

13. Process for bonding a substrate **S1** to a substrate **S2,** which comprises the steps of:
α) heating a curable composition according to Claim 11 by a suitable method to a temperature of 60°C to 160°C, preferably of 80°C to 140°C, more preferably of 90°C to 130°C; then
either
β) applying the composition heated in step α) to a substrate **S1;**
γ) contacting the composition applied with a substrate **S2** within the open time of the composition;
or
β') applying the composition heated in step α) to a substrate **S1** and to a substrate **S2;**
γ') contacting the compositions applied with one another within the open time of the composition;
wherein there may be a period of a few minutes up to a few days or several weeks between the heating and the application of the composition;
and wherein the substrate **S2** consists of the same material as the substrate **S1** or a different material.

14. Use of a curable composition according to either of Claims 9 and 10 as a heat-curing adhesive, especially as an elastic heat-curing adhesive for industrial applications, for example for the assembly of automobiles, transport vehicles and ships, and as a heat-curing reaction resin in SMCs (sheet moulding compounds).

15. Use of a curable composition according to Claim 11 as a heat-activatable adhesive, sealant or coating, especially as a heat-activatable elastic adhesive and sealant for construction and industrial applications, preferably as a sealant in the form of movement joints for built structures or as an adhesive for the assembly of automobiles, transport vehicles or ships.

## Revendications

1. Composition durcissable comprenant
a) au moins une amine bloquée **BA,** qui présente un groupe amino bloqué, activable par hydrolyse et soit au moins un autre groupe amino bloqué, activable par hydrolyse, soit au moins un groupe réactif **R,** qui est choisi dans le groupe constitué par le groupe hydroxyle, le groupe mercapto et le groupe amino secondaire ;
b) au moins un polyisocyanate **DI** solide à température ambiante, à surface désactivée ; et
c) le cas échéant de l'eau ou une substance générant de l'eau.

2. Composition durcissable selon la revendication 1, **caractérisée en ce que** le diamètre moyen des particules du polyisocyanate **DI** à surface désactivée se situe dans la plage de 0,01 à 100 µm, de préférence de 0,1 à 50 µm, de manière particulièrement préférée de 0,3 à 30 µm.

3. Composition durcissable selon la revendication 1 ou 2, **caractérisée en ce que** le polyisocyanate à la base du polyisocyanate **DI** solide à température ambiante, à surface désactivée, est choisi dans le groupe constitué par le naphtalène-1,5-diisocyanate ( N D I ) , le 3 , 3 ' -diméthyl-4, 4' -diisocyanatodiphényle (TODI), le 1,4-phénylènediisocyanate, l'isocyanurate de 1-isocyanato-3,3,5-triméthyl-5-isocyanatométhylcyclohexane, l'uretdione de 4,4'-diphénylméthanediisocyanate, l'uretdione de 2,4-toluylènediisocyanate et l'urée de 2,4-toluylènediisocyanate.

4. Composition durcissable selon l'une quelconque des revendications précédentes, **caractérisée en ce que** l'amine bloquée **BA** et le polyisocyanate **DI** à surface désactivée se trouvent dans la composition durcissable en une quantité telle que le rapport entre les groupes amino bloqués et les groupes isocyanate est de 0,1 à 1,1, de préférence de 0,2 à 1,1, de manière particulièrement préférée de 0,3 à 1,0.

5. Composition durcissable selon l'une quelconque des revendications précédentes, **caractérisée en ce que** l'amine bloquée **BA** est une aldimine **BA2** de formule (I), 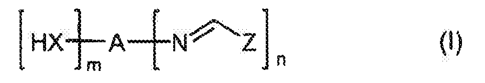 où
n vaut 1 ou 2 ou 3 ou 4, et
m vaut 0 ou 1,
à condition que m + n vaille 2 ou 3 ou 4 ; et où
A représente soit un radical hydrocarboné m+n-valent comprenant 2 à 30 atomes de carbone, qui contient le cas échéant au moins un hétéroatome, en particulier sous forme d'oxygène de fonction éther ou d'azote de fonction amine tertiaire,
soit, ensemble avec R⁷, un radical hydrocarboné (n+2)-valent comprenant 3 à 30 atomes de carbone, qui contient le cas échéant au moins un hétéroatome, en particulier sous forme d'oxygène de fonction éther ou d'azote de fonction amine tertiaire ;
X représente O ou S ou N-R⁶ ou N-R⁷,
où
R⁶ représente soit un radical hydrocarboné monovalent comprenant 1 à 20 atomes de carbone, qui présente le cas échéant au moins un groupe ester d'acide carboxylique, nitrile, nitro, ester d'acide phosphonique, sulfone ou ester d'acide sulfonique,
soit un substituant de formule (II), 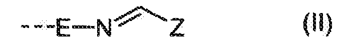 où
E représente un radical hydrocarboné divalent, présentant le cas échéant un oxygène de fonction éther ou un azote de fonction amine tertiaire, comprenant 2 à 12 atomes de carbone ; et
R⁷ représente, ensemble avec A, un radical hydrocarboné (n+2)-valent comprenant 3 à 30 atomes de carbone, qui contient le cas échéant au moins un hétéroatome, en particulier sous forme d'oxygène de fonction éther ou d'azote de fonction amine tertiaire ; et
Z est exempt de groupes réactifs **R** et de groupes amino primaires et représente soit un radical Z¹ de formule (III) 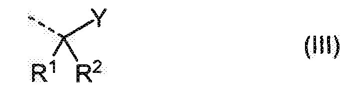 où
Y représente un radical hydrocarboné monovalent comprenant 1 à 32 atomes de carbone, qui présente le cas échéant au moins un hétéroatome, en particulier de l'oxygène ou de l'azote sous forme de groupes éther, carbonyle, ester, amido, urée, uréthane ou amino tertiaire, et
R¹ et R² représentent soit, indépendamment l'un de l'autre, à chaque fois un radical hydrocarboné monovalent comprenant 1 à 12 atomes de carbone,
soit, ensemble, un radical hydrocarboné divalent comprenant 4 à 12 atomes de carbone, qui fait partie d'un cycle carbocyclique, le cas échéant substitué, comprenant 5 à 8, de préférence 6, atomes de carbone,
soit représente un radical Z²,
où Z² représente soit un groupe aryle ou hétéroaryle substitué ou non substitué, qui présente une taille de cycle entre 5 et 8, de préférence 6, atomes,
soit 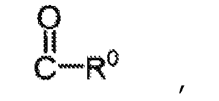 où R⁰ représente un atome d'hydrogène ou un radical alcoxy ou un groupe alcényle ou arylalcényle substitué ou non substitué comprenant au moins 6 atomes de carbone.

6. Composition durcissable selon la revendication 5, **caractérisée en ce que** l'aldimine **BA2** de formule (I) présente un radical Z¹ de formule (IIIa' ) 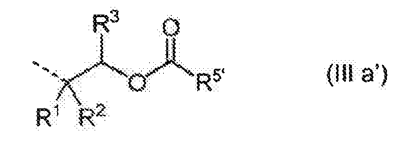 où
R³ représente un atome d'hydrogène ou un groupe alkyle ou un groupe cycloalkyle ou un groupe arylalkyle comprenant 1 à 12 atomes de carbone ; et
R⁵' représente
soit un radical alkyle linéaire ou ramifié comprenant 6 à 30 atomes de carbone, en particulier 11 à 30 atomes de carbone, le cas échéant avec des proportions cycliques et le cas échéant avec au moins un hétéroatome, en particulier de l'oxygène sous forme de groupes éther, carbonyle ou ester,
soit un radical hydrocarboné linéaire ou ramifié, monoinsaturé ou polyinsaturé, comprenant 6 à 30 atomes de carbone, en particulier 11 à 30 atomes de carbone.

7. Composition durcissable selon l'une quelconque des revendications 1 à 4, **caractérisée en ce que** l'amine bloquée **BA** est une amine bloquée polymère **PBA,** qui représente un polymère présentant au moins deux groupes amino bloqués, activables par hydrolyse.

8. Composition durcissable selon l'une quelconque des revendications 1 à 4, **caractérisée en ce que** l'amine bloquée **BA** est une amine bloquée polymère **PBA2',** qui est exempte de groupes isocyanate, de groupes réactifs **R** et de groupes amino primaires, et qui présente des groupes aldimino de formule (XII a), 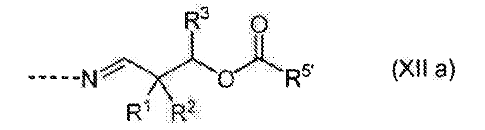 où
R¹ et R² représentent
soit, indépendamment l'un de l'autre, à chaque fois un radical hydrocarboné monovalent comprenant 1 à 12 atomes de carbone,
soit, ensemble, un radical hydrocarboné divalent comprenant 4 à 12 atomes de carbone, qui fait partie d'un cycle carbocyclique, le cas échéant substitué, comprenant 5 à 8, de préférence 6, atomes de carbone ;
R³ représente un atome d'hydrogène ou un groupe alkyle ou un groupe cycloalkyle ou un groupe arylalkyle comprenant 1 à 12 atomes de carbone ; et
R⁵' représente
soit un radical alkyle linéaire ou ramifié comprenant 6 à 30 atomes de carbone, en particulier 11 à 30 atomes de carbone, le cas échéant avec des proportions cycliques et le cas échéant avec au moins un hétéroatome, en particulier de l'oxygène sous forme de groupes éther, carbonyle ou ester,
soit un radical hydrocarboné linéaire ou ramifié, monoinsaturé ou polyinsaturé, comprenant 6 à 30 atomes de carbone, en particulier 11 à 30 atomes de carbone.

9. Composition durcissable selon l'une quelconque des revendications précédentes, **caractérisée en ce que** la composition contient de l'eau ou une substance générant de l'eau en une quantité telle que le rapport entre le nombre de molécules d'eau et le nombre de groupes amino bloqués est supérieur à 0,25, de préférence d'au moins 0,5, et est en outre **caractérisée en ce que** la composition est thermodurcissable.

10. Composition durcissable selon l'une quelconque des revendications 1 à 4, **caractérisée en ce que** les groupes amino bloqués présents dans la composition se trouvent sous forme de groupes énamino et/ou de groupes cétimino ou aldimino aptes à la formation d'une énamine, et **en ce que** la composition est exempte d' eau ou contient de l'eau en une quantité telle que le rapport entre le nombre de molécules d'eau et le nombre de groupes amino bloqués est d' au plus 0,25, et est en outre **caractérisée en ce que** la composition est thermodurcissable.

11. Composition durcissable selon l'une quelconque des revendications 1 à 8, **caractérisée en ce que** les groupes amino bloqués se trouvant dans la composition se trouvent sous forme de groupes oxazolidino ou et de groupes aldimino non aptes à la formation d'énamine, et **en ce que** la composition est exempte d'eau ou contient de l'eau en une quantité telle que le rapport entre le nombre de molécules d'eau et le nombre de groupes amino bloqués est d' au plus 0,1, et en outre **caractérisée en ce que** la composition contient le cas échéant un polyol P et **en ce que** la composition est thermoactivable.

12. Procédé pour le collage d' un substrat **S1** avec un substrat **S2,** qui comprend les étapes
i) application d'une composition durcissable selon l'une quelconque des revendications 9 à 10 sur un substrat **S1 ;**
ii) mise en contact de la composition appliquée avec un substrat **S2 ;** ou
i') application d'une composition durcissable selon l'une quelconque des revendications 9 à 10 à chaque fois sur un substrat **S1** et sur un substrat **S2 ;**
ii') mise en contact de la composition appliquée l'une avec l'autre ;
et ensuite
iii) chauffage de la composition appliquée par un procédé approprié à une température de 60°C à 160°C, de préférence de 80°C à 140°C, de manière particulièrement préférée de 90°C à 130°C ;
le substrat **S2** étant constitué par le même matériau que le substrat **S1** ou par un matériau différent du substrat **S1**.

13. Procédé pour le collage d' un substrat **S1** avec un substrat **S2**, qui comprend les étapes
α) chauffage d'une composition durcissable selon la revendication 11 par un procédé approprié à une température de 60°C à 160°C, de préférence de 80°C à 140°C, de manière particulièrement préférée de 90°C à 130°C ; ensuite
soit
β) application de la composition chauffée dans l'étape α) sur un substrat **S1** ;
γ) mise en contact de la composition appliquée avec un substrat **S2** pendant le temps ouvert de la composition ;
soit
β) application de la composition chauffée dans l'étape α) sur un substrat **S1** et sur un substrat **S2** ;
γ') mise en contact de la composition appliquée l'une avec l'autre pendant le temps ouvert de la composition ;
un laps de temps de quelques minutes à quelques jours ou plusieurs semaines pouvant s'écouler entre le chauffage et l'application de la composition ;
et le substrat **S2** étant constitué par le même matériau que le substrat **S1** ou par un matériau différent du substrat **S1**.

14. Utilisation d'une composition durcissable selon l'une quelconque des revendications 9 ou 10 comme adhésif thermodurcissable, en particulier comme adhésif thermodurcissable élastique pour des applications industrielles, par exemple pour le montage d'automobiles, de véhicules de transport et de bateaux ainsi que comme résine réactive thermodurcissable dans des SMC (sheet moulding compounds - composés de moulage de feuilles).

15. Utilisation d'une composition durcissable selon la revendication 11 comme adhésif, matériau d'étanchéité ou revêtement thermoactivable, en particulier comme adhésif et matériau d'étanchéité thermoactivable pour des applications de construction et industrielles, de préférence comme matériau d'étanchéité sous forme de joints mobiles pour des constructions ou comme adhésif pour le montage d'automobiles, de véhicules de transport ou de bateaux.
